# EUROPÄISCHE PATENTSCHRIFT

(11) **EP 3 571 020 B1**
(45) Veröffentlichungstag und Bekanntmachung des Hinweises auf die Patenterteilung: **20.10.2021**
(21) Anmeldenummer: 18707220.2
(22) Anmeldetag: 16.01.2018
(51) Int. Cl.: B25J 9/16, B25J 13/08, B25J 19/02

(54) **VERFAHREN UND VORRICHTUNG ZUM KOMMISSIONIEREN VON WAREN**
METHOD AND DEVICE FOR PICKING GOODS
PROCÉDÉ ET DISPOSITIF DE PRÉPARATION DE COMMANDES DE MARCHANDISES

(30) Priorität: 18.01.2017 AT 500322017
(43) Veröffentlichungstag der Anmeldung: 27.11.2019
(73) Patentinhaber: TGW Logistics Group GmbH, 4614 Marchtrenk (AT)
(72) Erfinder: BEINHOFER, Maximilian, 4600 Thalheim bei Wels (AT); SCHRÖPF, Harald Johannes, 4600 Wels (AT)
(74) Vertreter: Burger, Hannes
(86) Internationale Anmeldenummer: PCT/AT2018/060012
(87) Internationale Veröffentlichungsnummer: WO 2018/132855

(56) Entgegenhaltungen:
- DE-A1-102010 002 317
- DE-A1-102014 016 032
- US-A1- 2011 153 065

## Beschreibung

Die Erfindung betrifft ein Verfahren zum Kommissionieren von Waren beziehungsweise Objekten, bei dem a) mit Hilfe eines Roboters zumindest ein Objekt aus einem Quell-Ladehilfsmittel entnommen wird und b) das zumindest eine Objekt mit Hilfe des besagten Roboters in ein Ziel-Ladehilfsmittel abgelegt beziehungsweise in dieses eingebracht wird, wobei c) nach der Entnahme des Objekts aus dem Quell-Ladehilfsmittel mit Hilfe eines ersten Sensorsystems geprüft wird, ob zumindest ein Objekt durch den Roboter gehalten wird. Die Erfindung betrifft weiterhin eine Vorrichtung zum Kommissionieren von Waren beziehungsweise Objekten, umfassend einen Roboter mit Mitteln zur Entnahme zumindest eines Objekts aus einem Quell-Ladehilfsmittel und zum Ablegen des zumindest einen Objekts in ein Ziel-Ladehilfsmittel, sowie eine Bereitstelleinrichtung zum Bereitstellen des Quell-Ladehilfsmittels und des Ziel-Ladehilfsmittels in einem Wirkungsbereich oder Greifbereich des Roboters. Zudem umfasst die Vorrichtung ein erstes Sensorsystem zur Überprüfung, ob zumindest ein Objekt durch den Roboter gehalten wird. Schließlich betrifft die Erfindung auch ein Computerprogrammprodukt mit einem darauf gespeicherten Computerprogramm, das in einen Rechner einer Vorrichtung der oben genannten Art ladbar ist und dort ein Verfahren nach der oben genannten Art ausführt, wenn das Computerprogramm dort ausgeführt wird.

Ein Verfahren und eine Vorrichtung der genannten Art sind aus dem Stand der Technik grundsätzlich bekannt. Beispielsweise kann am oder im Greifer eines Roboters ein Sensor angeordnet sein, welcher prüft, ob vom Roboter tatsächlich ein Objekt gehalten wird oder nicht. Die bislang eingesetzten Sensoren eignen sich aber nur für vergleichsweise einfache Aufgaben und sind nicht dafür geeignet, einen fehlerfreien oder weitgehend fehlerfreien Ablauf eines relativ komplexen Kommissioniervorgangs zu garantieren.

Beispielsweise offenbart die DE 10 2010 002 317 A1 in diesem Zusammenhang ein System zur Vereinzelung und Kommissionierung von Apothekenartikeln. Das System umfasst eine erste Erfassungseinrichtung zur Erfassung einer Position der Artikel auf einer Transporteinrichtung und eine Handhabungseinrichtung zur separaten Entnahme von Artikeln von der Transporteinrichtung und Ablage auf einer anderen Transporteinrichtung. Weiterhin umfasst das System eine zweite Erfassungseinrichtung zur Identifizierung der Artikel und eine Ablagezone zur Zwischenlagerung eines von der zweiten Erfassungseinrichtung nicht identifizierten Artikels.

Eine Aufgabe der Erfindung ist es nun, ein verbessertes Verfahren und eine verbesserte Vorrichtung zum Kommissionieren von Waren beziehungsweise Objekten anzugeben. Das Verfahren soll nach Möglichkeit selbstständig von einem Roboter ausgeführt werden können, und es soll kein oder nur ein geringer Bedarf nach einer Intervention durch einen Menschen bestehen.

Die Aufgabe der Erfindung wird mit dem Verfahren des Anspruchs 1 und der Vorrichtung des Anspruchs 28 gelöst.

Die Aufgabe der Erfindung wird schließlich mit einem Computerprogrammprodukt gemäß dem Gegenstand des Anspruchs 38 gelöst.

Der Roboter führt also einen Kommissioniervorgang aus und befüllt dabei beispielsweise einen als Ziel-Ladehilfsmittel fungierenden Versandkarton mit den von einem Kunden bestellten Waren beziehungsweise Objekten, entweder mit einem (einzigen) Durchlauf der Schritte a) bis e) oder auch durch rekursives Wiederholen der genannten Schritte a) bis e). Bei jedem Durchlauf wird geprüft, ob die Anzahl und/oder die Type der aus dem Quell-Ladehilfsmittel entnommenen Objekte zur Vervollständigung eines Kommissionierauftrages beiträgt, das heißt ob die Anzahl des zumindest einen aus dem Quell-Ladehilfsmittel entnommenen Objekts kleiner als die oder gleich der Differenz zwischen der Soll-Anzahl und der Ist-Anzahl der im Ziel-Ladehilfsmittel enthaltenen Objekte ist. Zusätzlich oder alternativ sollen die Typen der aus dem Quell-Ladehilfsmittel entnommenen Objekte mit den Typen der im Ziel-Ladehilfsmittel noch fehlenden Objekte übereinstimmen. Der Roboter kann zum Beispiel als Portalroboter oder als Mehrachsroboter/Knickarmroboter (Industrieroboter) ausgeführt sein.

Die "Objekttype" oder "Objektart" wird durch Eigenschaften eines Objekts bestimmt. Eine Objekteigenschaft kann beispielsweise die Farbe oder ein Grauwert des Objekts sein, eine geometrische Form (kugelig, quaderförmig, flaschenförmig, etc.), ein Gewicht und/oder eine Abmessung (Länge, Breite, Höhe, etc.). Für die Bestimmung einer Objekttype/Objektart kann ein beliebiger Satz an Objekteigenschaften herangezogen werden, der beispielsweise nur eine der oben angeführten Objekteigenschaften aufweist oder aber auch eine beliebige Kombination derselben. Dementsprechend kann der Satz an Objekteigenschaften einen beliebigen Bereich der zur Verfügung stehenden Objekteigenschaften abdecken. Die Begriffe "Objekttype" und "Objektart" können im Rahmen dieser Offenbarung synonymisch gebraucht werden.

Die Mittel zur Entnahme und zum Ablegen des zumindest einen Objekts können beispielweise durch einen zangenartigen oder handartigen Greifer oder durch einen Vakuum-Greifer gebildet sein oder auch durch eine beliebige Kombination dieser Greifer. Darüber hinaus kann das erste Sensorsystem in einer vorteilhaften Ausgestaltung der vorgestellten Vorrichtung am Roboter angeordnet sein. Das erste Sensorsystem kann einen Ultraschallsensor und/oder, sofern der Roboter mit einem Vakuum-Greifer ausgestattet ist, einen Vakuum-Sensor umfassen. Insbesondere kann für je einen Vakuum-Greifer je ein Vakuumsensor vorgesehen sein. Beispielsweise können im ersten Sensorsystem drei Vakuumsensoren (für drei Vakuum-Greifer) und ein Ultraschallsensor vorgesehen sein. Das erste Sensorsystem kann auch ein RFID-Lesegerät, eine Kamera und/oder eine Waage / einen Kraftsensor aufweisen. An dieser Stelle wird angemerkt, dass das "Ablegen" eines Objekts im Rahmen der Erfindung auch das gezielte Fallenlassen eines Objekts umfasst. Beispielsweise können Objekte im Rahmen des Ablegevorgangs (aus geringer Höhe) in oder auf das Ziel-Ladehilfsmittel fallen gelassen werden.

Ein Ladehilfsmittel kann beispielsweise eine Kiste sein, insbesondere aus Kunststoff, eine Schachtel (z.B. aus Karton), eine Tüte, ein Sack, ein Tablar, eine Palette, ein Korb oder ähnliches.

Die vorgestellte Erfindung eignet sich im Besonderen zum Kommissionieren eines Kundenauftrags, ist aber nicht grundsätzlich darauf beschränkt. Ein Kommissioniervorgang kann im Rahmen der Erfindung auch generell das Manipulieren oder Packen von Waren beziehungsweise Objekten umfassen, beispielsweise am Wareneingang eines Lagersystems. Zum Beispiel kann die vorgestellte Erfindung dazu eingesetzt werden, Objekte von eingehenden Quell-Ladehilfsmitteln in Ziel-Ladehilfsmittel umzupacken, die dann in ein (automatisiertes) Lager verbracht werden, beziehungsweise generell für das Umladen von Objekten von einem Quell-Ladehilfsmittel in ein Ziel-Ladehilfsmittel.

Gelingt die Vervollständigung des Kommissioniervorgangs durch den Roboter auch nach mehreren Anläufen nicht, so kann vorgesehen sein, dass die Vervollständigung des Kommissioniervorgangs durch einen anderen Roboter oder durch den Menschen erfolgt. Beispielsweise kann dieser Fall eintreten, wenn für die Vervollständigung des Kommissioniervorgangs nur mehr ein Objekt fehlt, der Roboter jedoch wiederholt mehrere Objekte ergreift. Die Anzahl an Versuchen bis zum Abbruch kann vorgegeben sein. Die Vervollständigung des Kommissioniervorgangs durch einen anderen Roboter oder durch den Menschen muss nicht vor Ort erfolgen, sondern kann auch an einem anderen Platz erfolgen. Beispielsweise werden das Quell-Ladehilfsmittel und das Ziel-Ladehilfsmittel dafür zu einem Roboter spezieller Bauart befördert, der in der Lage ist auch schwierige Situationen zu bewältigen.

Der Begriff "Bereitstelleinrichtung" ist weit zu fassen und beinhaltet insbesondere eine Fördereinrichtung zur Zufuhr des Quell-Ladehilfsmittels in einen Wirkungsbereich des Roboters und zum Abtransport des Ziel-Ladehilfsmittels aus dem Wirkungsbereich des Roboters. Unter den Begriff "Fördereinrichtung" fallen im Speziellen stationäre Förderer (z.B. Rollenförderer) sowie auch (autonome) Flurförderfahrzeuge.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn im Fall e1) direkt mit Schritt a) fortgesetzt wird. Dementsprechend wird der Ablegevorgang sofort abgebrochen, wenn festgestellt wird, dass vom Roboter überhaupt kein Objekt gehalten wird. Das Kommissionierverfahren ist daher besonders zeiteffizient.

Vorteilhaft ist es weiterhin, wenn im Fall e2) alle durch den Roboter gehaltenen Objekte im Quell-Ladehilfsmittel abgelegt werden und mit Schritt a) fortgesetzt wird. Bei dieser Variante des vorgestellten Kommissionierverfahrens wird der Entnahmevorgang solange wiederholt, bis die aus dem Quell-Ladehilfsmittel entnommenen Objekte zur Vervollständigung des Kommissionierauftrages beitragen. Das Kommissionierverfahren ist in programmtechnischer beziehungsweise steuerungstechnischer Hinsicht daher besonders einfach.

Vorteilhaft ist es darüber hinaus, wenn im Fall e2) alle durch den Roboter gehaltenen Objekte an einer vom Quell-Ladehilfsmittel und vom Ziel-Ladehilfsmittel verschiedenen Ablageposition abgelegt werden, ein für das Ziel-Ladehilfsmittel bestimmtes Objekt erfasst und im Ziel-Ladehilfsmittel abgelegt und ein nicht für das Ziel-Ladehilfsmittel bestimmtes Objekt erfasst und im Quell-Ladehilfsmittel abgelegt wird und in Folge mit Schritt a) fortgesetzt wird. Bei dieser Variante des vorgestellten Kommissionierverfahrens werden die vom Roboter gehaltenen aber in Summe nicht zur Vervollständigung des Kommissionierauftrages beitragenden Objekte an einer Ablageposition beziehungsweise an einem Klärplatz abgelegt und im Hinblick darauf sortiert, ob diese zur Vervollständigung des Kommissionierauftrages beitragen oder nicht. Nicht beitragende Objekte werden zurück in das Quell-Ladehilfsmittel befördert, beitragende Objekte in das Ziel-Ladehilfsmittel. Der Ablauf des Kommissionierverfahrens ist daher besonders effizient. Das Ablegen der nicht für das Ziel-Ladehilfsmittel bestimmten Objekte im Quell-Ladehilfsmittel ist vorteilhaft aber nicht zwingend. Denkbar ist auch, dass mit den genannten Objekten anders verfahren wird. Beispielsweise können diese vorerst am Klärplatz verbleiben und von dort zu einem späteren Zeitpunkt beispielsweise in ein Lager zurück sortiert werden. Denkbar ist auch, dass am Klärplatz ein weiteres (drittes) Ladehilfsmittel vorgesehen wird, in das die genannten Objekte abgelegt werden und mit dem diese beispielsweise ein Lager zurück transportiert werden.

Vorteilhaft ist es zudem, wenn im Fall e2) alle durch den Roboter gehaltenen Objekte im Ziel-Ladehilfsmittel abgelegt werden, ein nicht für das Ziel-Ladehilfsmittel bestimmtes Objekt aus dem Ziel-Ladehilfsmittel entnommen und im Quell-Ladehilfsmittel abgelegt wird und in Folge mit Schritt a) fortgesetzt wird. Bei dieser Variante des vorgestellten Kommissionierverfahrens wird der Ablagevorgang in jedem Fall durchgeführt. Wird sodann festgestellt, dass das Ziel-Ladehilfsmittel auch solche Objekte enthält, die nicht zur Vervollständigung des Kommissioniervorgangs beitragen, dann werden diese Objekte wieder aus dem Ziel-Ladehilfsmittel entfernt und im Quell-Ladehilfsmittel abgelegt.

Bei einer weiteren vorteilhaften Variante des vorgestellten Kommissionierverfahrens sind die Objekte mit Radio-Identification-Tags, kurz RFID-Tags, ausgestattet, und
- das zweite Sensorsystem weist ein erstes RFID-Lesegerät für diese RFID-Tags auf, dessen Lesebereich das Quell-Ladehilfsmittel umfasst, das Ziel-Ladehilfsmittel und einen Haltebereich des Roboters jedoch ausschließt (insbesondere zeitweise), und es wird mit Hilfe einer mit dem ersten RFID-Lesegerät aus dem RFID-Tag ausgelesenen Information die Anzahl und/oder die Type des zumindest einen aus dem Quell-Ladehilfsmittel entnommenen Objekts ermittelt und/oder
- das zweite Sensorsystem weist ein zweites RFID-Lesegerät für diese RFID-Tags auf, dessen Lesebereich das Ziel-Ladehilfsmittel umfasst, das Quell-Ladehilfsmittel und einen Haltebereich des Roboters jedoch ausschließt (insbesondere zeitweise), und es wird mit Hilfe einer mit dem zweiten RFID-Lesegerät aus dem RFID-Tag ausgelesenen Information die Anzahl und/oder die Type des zumindest einen in das Ziel-Ladehilfsmittel abgelegten Objekts ermittelt und/oder
- das zweite Sensorsystem weist ein drittes RFID-Lesegerät für diese RFID-Tags auf, dessen Lesebereich einen Haltebereich des Roboters umfasst, das Quell-Ladehilfsmittel und das Ziel-Ladehilfsmittel jedoch ausschließt (insbesondere zeitweise), und es wird mit Hilfe einer mit dem dritten RFID-Lesegerät aus dem RFID-Tag ausgelesenen Information die Anzahl und/oder die Type des zumindest einen vom Roboter gehaltenen Objekts ermittelt. Dementsprechend umfasst das zweite Sensorsystem der vorgestellten KommissionierVorrichtung ein RFID-Lesegerät für Radio-Identification-Tags, kurz RFID-Tags, dessen Lesebereich das Quell-Ladehilfsmittel, das Ziel-Ladehilfsmittel und/oder einen Haltebereichs des Roboters umfasst. Vorteilhaft ist auf einem RFID-Tag die Type jenes Objekts gespeichert, auf oder in dem der RFID-Tag angeordnet ist, oder es ist auf dem besagten RFID-Tag ein Verweis in eine Datenbank gespeichert, in der die besagte Type gespeichert ist. Durch die Verwendung von RFID-Tags kann die Anzahl und/oder Type der im Quell-Ladehilfsmittel, im Haltebereich des Roboters und/oder im Ziel-Ladehilfsmittel vorhandenen Objekte besonders gut ermittelt werden. Im Grunde braucht dazu nur die auf den RFID-Tags gespeicherte Information (z.B. Type = Vollmilch 3,5%, Gewicht = 1 kg, Breite = 7 cm, Tiefe = 7 cm, Höhe = 20 cm) ausgewertet werden. Auf diese Weise kann festgestellt werden, welche Objekte dem Quell-Ladehilfsmittel entnommen und welche Objekte im Ziel-Ladehilfsmittel abgelegt werden.

Besonders vorteilhaft ist es, wenn
- die im Quell-Ladehilfsmittel enthaltenen Objekte mit Hilfe des ersten RFID-Lesegeräts vor und nach der Entnahme des zumindest einen Objekts erfasst werden und die Anzahl und/oder die Type des zumindest einen aus dem Quell-Ladehilfsmittel entnommenen Objekts anhand einer ermittelten Differenz der bei den beiden Lesevorgängen erfassten Objekte bestimmt wird und/oder wenn
- die im Ziel-Ladehilfsmittel enthaltenen Objekte mit Hilfe des zweiten RFID-Lesegeräts vor und nach dem Ablegen des zumindest einen Objekts erfasst werden und die Anzahl und/oder die Type des zumindest einen im Ziel-Ladehilfsmittel abgelegten Objekts anhand einer ermittelten Differenz der bei den beiden Lesevorgängen erfassten Objekte bestimmt wird.

Bei dieser Variante des Kommissionierverfahrens werden die vom Roboter gehaltenen Objekte respektive die von ihm abgelegten Objekte über die Differenzbildung zweier Lesevorgänge ermittelt. Am Roboter selbst brauchen daher keine Mittel zur Ermittlung der Anzahl und/oder der Type von Objekten vorgesehen sein.

Besonders vorteilhaft ist es auch, wenn ein an einem bewegten Teil des Roboters angeordnetes drittes RFID-Lesegerät für RFID-Tags
- zum Quell-Ladehilfsmittel hin bewegt wird, um die im Quell-Ladehilfsmittel enthaltenen Objekte zu erfassen, und/oder
- zum Ziel-Ladehilfsmittel hin bewegt wird, um die im Ziel-Ladehilfsmittel enthaltenen Objekte zu erfassen, und/oder
- vom Quell-Ladehilfsmittel und vom Ziel-Ladehilfsmittel weg bewegt wird, um die vom Roboter im Haltebereich gehaltenen Objekte zu erfassen.

Bei dieser Variante des Kommissionierverfahrens wird im Grunde nur ein einziges RFID-Lesegerät benötigt, um die im Quell-Ladehilfsmittel, im Ziel-Ladehilfsmittel und im Haltebereich befindlichen Objekte zu identifizieren. Das RFID-Lesegerät wird dabei mit Hilfe des Roboters so ausgerichtet beziehungsweise positioniert, dass es jeweils nur die im Quell-Ladehilfsmittel, im Ziel-Ladehilfsmittel oder im Haltebereich befindlichen Objekte erfassen kann.

In einer weiteren vorteilhaften Ausführungsvariante des vorgestellten Kommissionierverfahrens weist das zweite Sensorsystem eine Kamera und/oder einen 3D-Sensor beziehungsweise ein 3D-Erkennungssystem auf, und es wird
- die Anzahl und/oder die Type des zumindest einen aus dem Quell-Ladehilfsmittel entnommenen Objekts durch einen Vergleich eines vor und eines nach dem Entnahmevorgang erfassten Abbildes eines Inhalts des Quell-Ladehilfsmittels ermittelt und/oder
- die Anzahl und/oder die Type des zumindest einen im Ziel-Ladehilfsmittel abgelegten Objekts durch einen Vergleich eines vor und eines nach dem Ablegevorgang erfassten Abbildes eines Inhalts des Ziel-Ladehilfsmittels ermittelt und/oder
- die Anzahl und/oder die Type des zumindest einen vom Roboter gehaltenen Objekts anhand eines vom Haltebereich des Roboters erfassten Abbilds ermittelt. Ähnlich wie bei der Verwendung von RFID-Lesegeräten werden die Anzahl und/oder die Type der aus dem Quell-Ladehilfsmittel entnommenen, der im Haltebereich vorhandenen und/oder der im Ziel-Ladehilfsmittel abgelegten Objekte durch Differenzbildung zweier Erfassungsvorgänge ermittelt, hier durch Erfassen zweier Abbilder zu verschiedenen Zeitpunkten beziehungsweise in verschiedenen Zuständen der Kommissioniervorrichtung.

Bei einer weiteren vorteilhaften Variante des vorgestellten Kommissionierverfahrens wird
- das Quell-Ladehilfsmittel vor und nach der Entnahme des zumindest einen Objekts mit Hilfe einer Waage, welche vom zweiten Sensorsystem umfasst ist, gewogen, und es wird die Anzahl und/oder die Type des zumindest einen aus dem Quell-Ladehilfsmittel entnommenen Objekts anhand eines gemessenen Differenzgewichts ermittelt, und/oder es wird
- das Ziel-Ladehilfsmittel vor und nach dem Ablegen des zumindest einen Objekts mit Hilfe einer Waage, welche vom zweiten Sensorsystem umfasst ist, gewogen, und es wird die Anzahl und/oder die Type des zumindest einen im Ziel-Ladehilfsmittel abgelegten Objekts anhand eines gemessenen Differenzgewichts ermittelt, und/oder es wird
- ein vor und nach der Entnahme des zumindest einen Objekts vom Roboter gehaltenes Gewicht mit Hilfe einer Waage (insbesondere mit Hilfe eines am Roboter angeordneten Wiege- oder Kraftsensors), welche vom zweiten Sensorsystem umfasst ist, gemessen, und es wird die Anzahl und/oder die Type des zumindest einen vom Roboter gehaltenen Objekts anhand eines gemessenen Differenzgewichts ermittelt.

Insbesondere ist dabei
- ein Gewicht eines im Quell-Ladehilfsmittel enthaltenen Objekts einer Type bekannt, und es wird
- die Anzahl und/oder die Type des zumindest einen aus dem Quell-Ladehilfsmittel entnommenen Objekts und/oder im Ziel-Ladehilfsmittel abgelegten Objekts und/oder vom Roboter gehaltenen Objekts dadurch ermittelt, dass nach einer Kombination von im Quell-Ladehilfsmittel enthaltenen Objekten gesucht wird, deren Gesamtgewicht dem Differenzgewicht im Wesentlichen gleicht.

Bei dieser Variante des Kommissioniervorgangs wird davon ausgegangen, dass das Gewicht eines im Quell-Ladehilfsmittel enthaltenen Objekts bekannt ist. Beispielsweise wird dieses einem übergeordneten Rechner bei einem Wareneingang mitgeteilt oder von diesem ermittelt. Generell kann davon ausgegangen werden, dass die in einem Ladehilfsmittel enthaltenen Objekte in einem Warenlagersystem bekannter Bauart im Hinblick auf Type und Anzahl grundsätzlich bekannt sind. Mit dieser Information können in Folge die aus dem Quell-Ladehilfsmittel entnommenen Objekte, die im Haltebereich befindlichen Objekte und/oder die im Ziel-Ladehilfsmittel abgelegten Objekte identifiziert werden. Der Begriff "im Wesentlichen" bedeutet im gegebenen Zusammenhang eine Abweichung von ±10% vom Referenzwert.

Im Speziellen wird das Differenzgewicht durch das Gesamtgewicht jeder Kombination von im Quell-Ladehilfsmittel enthaltenen Objekten bis zu einer Gesamtzahl von fünf Objekten oder bis zu einer Gesamtzahl von Objekten, welche in einem Entnahmevorgang durch den Roboter aus dem Quell-Ladehilfsmittel entnommen werden können, dividiert, und die gesuchte Kombination ist jene, welcher der am nächsten bei Eins liegende Wert zugeordnet ist. Als Basis für die Berechnung kann - sofern diese bekannt ist - die Gesamtzahl von Objekten, welche in einem Entnahmevorgang durch den Roboter aus dem Quell-Ladehilfsmittel entnommen werden können, herangezogen werden. Ist diese Gesamtzahl nicht bekannt, so kann - unter der Annahme, dass der Roboter nicht mehr Objekte aus dem Quell-Ladehilfsmittel entnehmen kann, eine Gesamtzahl von fünf Objekten als Basis für die Berechnung herangezogen werden. Sind die Objekte im Quell-Ladehilfsmittel sortenrein und haben demzufolge alle dasselbe Gewicht, so kann die Anzahl der aus dem Quell-Ladehilfsmittel entnommenen Objekte und/oder die Anzahl der im Ziel-Ladehilfsmittel abgelegten Objekte und/oder die Anzahl und/oder die Type der vom Roboter gehaltenen Objekte einfach mittels einer Division des gemessenen Differenzgewichts durch das Gewicht eines Objekts ermittelt werden.

Besonders vorteilhaft ist es auch, wenn sich das Gesamtgewicht jeder Kombination von Objekten bis zu einer Gesamtzahl von fünf Objekten oder bis zu einer Gesamtzahl von Objekten, welche in einem Entnahmevorgang durch den Roboter aus dem Quell-Ladehilfsmittel entnommen werden können, voneinander unterscheidet. Auf diese Weise wird sichergestellt, dass jede Kombination von Objekten ein eindeutiges Gesamtgewicht aufweist und es keine Kombinationen von Objekten gibt, die (im Wesentlichen) das gleiche Gesamtgewicht aufweisen. Die aus dem Quell-Ladehilfsmittel entnommenen, im Haltebereich befindlichen und/oder im Ziel-Ladehilfsmittel abgelegten Objekte können somit eindeutig identifiziert werden. Grundsätzlich funktioniert das vorgestellte Kommissionierverfahren aber auch dann, wenn nicht jede Kombination von Objekten ein eindeutiges Gesamtgewicht aufweist. Gegebenenfalls ist dann eine Fehlerbehandlung nach dem Fall e2) durchzuführen. Ein trivialer Fall für eindeutige Gesamtgewichte ist dann gegeben, wenn im Quell-Ladehilfsmittel nur eine Type von Objekten enthalten ist.

Vorteilhaft wird so wie nach Auftreten des Falls e2) verfahren, wenn der am nächsten bei Eins liegende Wert eine über einem ersten Schwellwert liegende Abweichung von Eins oder eine unter einem zweiten Schwellwert liegende Abweichung vom zweitnächsten Wert aufweist. Auf diese Weise kann geprüft werden, ob der ermittelte Quotient nahe genug bei Eins liegt und das ermittelte Ergebnis daher sicher ist oder ob die Abweichung des Quotienten von Eins relativ groß ist und das ermittelte Ergebnis daher unsicher ist. Zu demselben Zweck kann zusätzlich oder alternativ der Abstand zu jenem Quotienten ermittelt werden, welcher am zweitnächsten zu Eins liegt. Ist der Abstand zu gering, so kann nicht mit Sicherheit gesagt werden, welcher der beiden Quotienten (nämlich der am nächsten oder der am zweitnächsten bei Eins liegende Quotient) der richtige ist, das heißt die tatsächlich dem Quell-Ladehilfsmittel entnommenen Objekte angibt. Ist der Abstand hinreichend groß, so gibt der am nächsten bei Eins liegende Quotient tatsächlich die dem Quell-Ladehilfsmittel entnommenen Objekte an.

Besonders vorteilhaft ist es auch, wenn wie nach dem Auftreten des Falls e2) verfahren wird und/oder ein Alarm ausgegeben wird, wenn
- ein Vergleich der ermittelten Anzahl und/oder der ermittelten Type des zumindest einen aus dem Quell-Ladehilfsmittel entnommenen Objekts eine Abweichung zu der ermittelten Anzahl und/oder der ermittelten Type des zumindest einen vom Roboter gehaltenen Objekts ergibt und/oder
- ein Vergleich der ermittelten Anzahl und/oder der ermittelten Type des zumindest einen aus dem Quell-Ladehilfsmittel entnommenen Objekts eine Abweichung zu der ermittelten Anzahl und/oder der ermittelten Type des zumindest einen im Ziel-Ladehilfsmittel abgelegten Objekts ergibt und/oder
- ein Vergleich der ermittelten Anzahl und/oder der ermittelten Type des zumindest einen vom Roboter gehaltenen Objekts eine Abweichung zu der ermittelten Anzahl und/oder der ermittelten Type des zumindest einen im Ziel-Ladehilfsmittel abgelegten Objekts ergibt. Auf diese Weise kann geprüft werden, ob alle vom Roboter aus dem Quell-Ladehilfsmittel entnommenen Objekte auch im Ziel-Ladehilfsmittel abgelegt wurden, oder ob eine Abweichung festgestellt wird, und demzufolge Objekte ungewollt vom Roboter heruntergefallen oder auf andere Weise am Weg verloren gegangen sind. An dieser Stelle wird angemerkt, dass ein Alarm nicht nur direkt wahrnehmbare akustische und/oder optische Signale umfassen kann, sondern darunter auch Meldungen an einen übergeordneten Rechner verstanden werden können.

Bei einer weiteren günstigen Variante des vorgestellten Verfahrens wird der Roboter für den Entnahmevorgang angewiesen, eine genaue Anzahl von Objekten und/oder ein bestimmtes Objekt oder bestimmte Objekte aus dem Quell-Ladehilfsmittel zu entnehmen. Auf diese Weise ist der Ablauf des Kommissioniervorgangs gut planbar beziehungsweise vorhersehbar. Im Regelfall und ohne Auftreten eines unvorhergesehenen Ereignisses entnimmt der Roboter immer jene Objekte aus dem Quell-Ladehilfsmittel, welche zur Vervollständigung des Kommissionierauftrages beitragen. Grundsätzlich ist der Ausgang der Prüfung gemäß Punkt e2) unabhängig davon, ob die Anzahl der entnommenen Objekte tatsächlich der vorgegebenen Anzahl der Objekte entspricht. Auch ein "Fehler" bei der Entnahme kann sinnvoll für die Vervollständigung eines Auftrags sein. Beispielsweise könnten statt einem vorgegebenen Objekt tatsächlich zwei Objekte erfasst worden sein. Fehlen für die Vervollständigung eines Auftrags aber ohnehin noch zwei oder mehr Objekte, dann ist das Ablegen der zu viel erfassten Objekte im Zielbehälter dennoch zweckmäßig. Der Vorgang zum Ablegen des zumindest einen Objekts in das Ziel-Ladehilfsmittel braucht dann nicht abgebrochen oder abgeändert werden.

Günstig ist es weiterhin, wenn der Roboter für den Entnahmevorgang angewiesen wird, das zumindest eine Objekt an einer genauen Position aus dem Quell-Ladehilfsmittel zu entnehmen und/oder an einer genauen Position im Ziel-Ladehilfsmittel abzulegen. Auch durch diese Maßnahmen bleibt der Ablauf des Kommissioniervorgangs gut planbar beziehungsweise vorhersehbar. Kann der Roboter die Vorgabe nicht erfüllen, dann kann vorgesehen sein, dass er im Rahmen einer vorgegebenen Anzahl an Wiederholungen versucht, die Vorgabe zu erfüllen. Alternativ oder zusätzlich kann vorgesehen sein, dass der Roboter versucht, die Vorgabe beim nächsten Objekt zu erfüllen.

Die vorgeschlagenen Maßnahmen können auch kombiniert werden, sodass der Roboter angewiesen wird, eine genaue Anzahl von Objekten von einer genauen örtlichen Position aus dem Quell-Ladehilfsmittel aufzunehmen und/oder an einer genauen örtlichen Position in oder auf das Ziel-Ladehilfsmittel abzulegen.

Günstig ist es aber auch, wenn der Roboter für den Entnahmevorgang angewiesen wird, eine beliebige Anzahl von Objekten und/oder irgendein Objekt oder irgendwelche Objekte aus dem Quell-Ladehilfsmittel zu entnehmen. Dies kann auch auf einen Bereich eingeschränkt werden. Beispielsweise kann vorgesehen sein, dass der Roboter für den Entnahmevorgang angewiesen wird, eine beliebige Anzahl von Objekten aus einem Zahlenbereich (also zum Beispiel 1 bis 3 Objekte) und/oder irgendein Objekt oder irgendwelche Objekte aus einem Bereich von Objetkttypen bzw. Objektarten (also zum Beispiel grüne und gelbe Objekte, jedoch keine blauen Objekte) aus dem Quell-Ladehilfsmittel zu entnehmen. Durch die vorgeschlagenen Maßnahmen ist der Entnahmevorgang programmtechnisch beziehungsweise steuerungstechnisch leicht durchzuführen, da dieser an keine Vorgaben gebunden ist. Eine Prüfung, ob die Anzahl und/oder die Type eines aus einem Quell-Ladehilfsmittel entnommenen Objekts zur Vervollständigung des Kommissionierauftrages beiträgt, erfolgt bei dieser Variante grundsätzlich erst nach dem Entnehmen der Objekte aus dem Quell-Ladehilfsmittel.

Günstig ist es weiterhin, wenn der Roboter für den Entnahmevorgang angewiesen wird, das zumindest eine Objekt an einer beliebigen Position aus dem Quell-Ladehilfsmittel zu entnehmen und/oder an einer beliebigen Position im Ziel-Ladehilfsmittel abzulegen. Dadurch ist der Entnahmevorgang beziehungsweise Ablegevorgang programmtechnisch beziehungsweise steuerungstechnisch leicht durchzuführen, da dieser an keine Vorgaben gebunden ist. Denkbar ist auch, dass die Entnahmeposition und/oder Ablegeposition auf einen örtlichen Bereich eingeschränkt ist. Beispielsweise kann vorgesehen sein, dass der Roboter für den Entnahmevorgang angewiesen wird, ein Objekt aus einem Bereich des Quell-Ladehilfsmittels (zum Beispiel aus der linken oberen Ecke) zu entnehmen und/oder ein Objekt in einen Bereich des Ziel-Ladehilfsmittels (zum Beispiel mittig) abzulegen.

Die vorgeschlagenen Maßnahmen können auch kombiniert werden, sodass der Roboter angewiesen wird, eine beliebige Anzahl von Objekten (insbesondere eine beliebige Anzahl aus einem gegebenen Zahlenbereich), beliebige Arten von Objekten (insbesondere aus einem gegebenen Bereich von Objekttypen/Objektarten - beispielsweise kann es grüne, rote und blaue Objekttypen/Objektarten geben, von denen der genannte Bereich zum Beispiel grüne und rote Objekte umfassen kann) von einer beliebigen Position (insbesondere von einem örtlichen Bereich) aus dem Quell-Ladehilfsmittel aufzunehmen und/oder an einer beliebigen Position (insbesondere in einem örtlichen Bereich) in oder auf das Ziel-Ladehilfsmittel abzulegen.

Generell kann die Position, an der ein Objekt aus dem Quell-Ladehilfsmittel entnommen wird, und die Position, an der ein Objekt im Ziel-Ladehilfsmittel abgelegt wird, und auch die Position, an der ein Objekt von einem Klärplatz aufgenommen wird, mit Hilfe einer Kamera und/oder einem 3D-Sensor/3D-Erkennungssystem bestimmt werden. Auch der Entnahmevorgang oder Ablegevorgang selbst können mit Hilfe einer Kamera und/oder einem 3D-Sensor/3D-Erkennungssystem überwacht werden. Die Kamera und/oder der 3D-Sensor / das 3D-Erkennungssystem können Teil des ersten oder zweiten Sensorsystems sein, sie können aber auch ein eigenständiges System bilden. In letzterem Fall sind die Kamera und/oder der 3D-Sensor / das 3D-Erkennungssystem dazu bestimmt, die Entnahmeposition(Greifposition)/ Ablageposition festzulegen, nicht jedoch um Anzahl/Type der entnommenen Objekte festzustellen. Die Prüfung des Entnahmevorgangs oder Ablegevorgangs kann mehrmals pro Sekunde erfolgen.

Vorteilhaft ist im Quell-Ladehilfsmittel nur eine Type von Objekten enthalten (d.h. die Objekte im Quell-Ladehilfsmittel sind sortenrein). Bei dieser Variante kann eine Überprüfung der Type von Objekten für den Kommissioniervorgang entfallen, da die Type der in den jeweiligen Quell-Ladehilfsmitteln enthaltenen Objekte bekannt ist, beispielsweise einem übergeordneten Rechner.

Günstig ist es, wenn das erste Sensorsystem nur einen Belegungszustand des Haltebereichs des Roboters durch zumindest ein Objekt ermittelt. Das heißt, das erste Sensorsystem unterscheidet bloß, ob kein Objekt oder wenigstens ein Objekt vom Roboter gehalten wird beziehungsweise im Haltebereich anwesend ist, und kann daher technisch einfach aufgebaut sein.

Günstig ist es weiterhin, wenn die Prüfung mit dem ersten Sensorsystem nur einmal pro Durchlauf der Schritte a) bis e) erfolgt. Auf diese Weise benötigt das vorgestellte Verfahren nur wenig Rechenleistung.

Günstig ist es aber auch, wenn die Prüfung mit dem ersten Sensorsystem mehrmals je Durchlauf der Schritte a) bis e) erfolgt. Auf diese Weise kann insbesondere zeitnah festgestellt werden, ob der Roboter ein Objekt unbeabsichtigt fallen gelassen hat und damit der Fall e1) eintritt.

Günstig ist es weiterhin, wenn das zweite Sensorsystem am Roboter angeordnet ist, insbesondere an einem bewegten Teil des Roboters. Das zweite Sensorsystem kann bei dieser Variante so ausgebildet sein, dass es nur den Haltebereich des Roboters erfasst und/oder so, dass es das Quell-Ladehilfsmittel und das Ziel-Ladehilfsmittel erfassen kann, wenn das zweite Sensorsystem dort hinbewegt wird. Das zweite Sensorsystem kann dabei insbesondere ein RFID-Lesegerät oder eine Kamera aufweisen. Grundsätzlich ist aber auch der Einsatz einer durch den Roboter bewegten Waage möglich. Beispielsweise kann die vom Roboter gehaltene Gewichtskraft durch einen entsprechenden Sensor ermittelt werden. Wird nun das Quell-Ladehilfsmittel oder das Ziel-Ladehilfsmittel vom Roboter angehoben, so kann das Gewicht der darin enthaltenen Objekte ermittelt werden. Selbstverständlich kann auch das Gewicht von im Haltebereich befindlichen Objekten mit Hilfe des genannten Sensors ermittelt werden.

Günstig ist es schließlich auch, wenn das zweite Sensorsystem stationär ist und das Quell-Ladehilfsmittel und/oder Ziel-Ladehilfsmittel erfasst. Dabei können gesonderte zweite Sensoren für das Quell-Ladehilfsmittel und das Ziel-Ladehilfsmittel vorgesehen sein, oder es ist ein gemeinsamer Sensor vorgesehen, beispielsweise eine Kamera, ein RFID-Lesegerät oder eine Waage, das/die sowohl das Quell-Ladehilfsmittel als auch das Ziel-Ladehilfsmittel erfassen kann. Denkbar wäre auch, dass der gemeinsame Sensor vom Quell-Ladehilfsmittel oder vom Ziel-Ladehilfsmittel wegbewegt werden kann, oder dass das Quell-Ladehilfsmittel oder das Ziel-Ladehilfsmittel vom gemeinsamen Sensor wegbewegt wird (beispielsweise mit Hilfe einer Fördereinrichtung), um eine nur auf das Quell-Ladehilfsmittel oder nur auf das Ziel-Ladehilfsmittel gerichtete Messung zu ermöglichen. Grundsätzlich ist auch denkbar, dass der Haltebereich des Roboters vom stationären zweiten Sensorsystem erfasst werden kann, wenn dieser dort hinbewegt wird.

Besonders vorteilhaft ist es auch, wenn die vorgestellte Vorrichtung eine zwischen dem Quell-Ladehilfsmittel und dem Ziel-Ladehilfsmittel angeordnete
- fixe ebene und horizontale Verbindungfläche oder
- fixe zum Quell-Ladehilfsmittel oder dem Ziel-Ladehilfsmittel hin geneigte Verbindungfläche oder
- fixe zur Ablageposition hin geneigte Verbindungfläche oder
- bewegliche, zum Quell-Ladehilfsmittel oder zum Ziel-Ladehilfsmittel oder zur Ablageposition hin neigbare Verbindungfläche/Klappe aufweist.

Auf diese Weise können vom Roboter unbeabsichtigt heruntergefallene Objekte leichter weiter in dem Ablauf zum Kommissionieren gehalten oder in diesen wieder eingegliedert werden. Mittels einer geneigten Verbindungsfläche rutschen vom Roboter unbeabsichtigt heruntergefallene Objekte automatisch an einen der vorgegebenen Plätze, also zum Quell-Ladehilfsmittel, zum Ziel-Ladehilfsmittel oder zur Ablageposition / zum Klärplatz (beziehungsweise in einen dort abgestellten Behälter). Denkbar wäre auch, dass die Verbindungsfläche eben beziehungsweise horizontal ausgerichtet ist, sodass vom Roboter heruntergefallene Objekte unter normalen Umständen dort liegen bleiben und vom Roboter wieder aufgenommen werden können. Die Verbindungsfläche kann auch federnd ausgeführt federnd gelagert sein. Die Verbindungsfläche kann sich auch rund um das Quell-Ladehilfsmittel und/oder rund um das Ziel-Ladehilfsmittel und/oder rund um einen am Klärplatz angeordneten Behälter erstrecken und diesen oder diese umranden. Ist eine Klappe vorgesehen, so können die oben genannten Möglichkeiten kombiniert werden, das heißt die Klappe kann in horizontaler Stellung als Ablageposition/Klärplatz fungieren und in hochgeklappter Stellung das heruntergefallene Objekt an einen vorgegebenen Platz befördern, also zum Quell-Ladehilfsmittel, zum Ziel-Ladehilfsmittel oder zur Ablageposition / zum Klärplatz (beziehungsweise in einen dort abgestellten Behälter). Die Klappe kann eine Schwenk- oder Drehachse haben, oder mehrere, die bedarfsweise aktiviert werden. Auf diese Weise kann ein und dieselbe Klappe beispielsweise zum Quell-Ladehilfsmittel oder zum Ziel-Ladehilfsmittel oder zur Ablageposition geschwenkt werden. Die gesondert aktivierbaren Schwenk- oder Drehachsen können zum Beispiel durch elektromagnetisch verschiebbare Bolzen gebildet sein, die jeweils eine Ruhestellung und eine Eingriffsstellung aufweisen. Die Klappe kann zudem einen eigenen Antrieb aufweisen, der zum Beispiel elektrisch, pneumatisch oder hydraulisch versorgt ist. Die Klappe kann aber auch durch den Roboter bewegt werden, insbesondere durch dessen Greifer. Besonders vorteilhaft an der schwenkbaren Klappe ist, dass heruntergefallene (und unter Umständen schwierig aufnehmbare/greifbare) Objekte nicht durch den Greifer des Roboters erfasst werden müssen, sondern einfach an die vorgegebene Position rutschen. Fällt ein Objekt auf die Verbindungsfläche oder Klappe, dann könnte eine Abänderung des Vorgangs zum Ablegen des zumindest einen Objekts in das Ziel-Ladehilfsmittel (gemäß Schritt e) somit das Aufnehmen des Objekts von der Verbindungsfläche oder das Hochschwenken der Klappe umfassen.

Der Bereich der Verbindungsfläche und/oder Klappe kann mit Hilfe von zumindest einem Sensor (zum Beispiel einer Kamera und/oder einem 3D-Sensor/3D-Erkennungssystem und/oder einer Waage) überwacht werden. Damit können Position, Lage, Anzahl und Art der vom Roboter heruntergefallenen Objekte bestimmt werden. Die Kamera und/oder der 3D-Sensor / das 3D-Erkennungssystem können Teil des ersten oder zweiten Sensorsystems sein, sie können aber auch ein eigenständiges drittes Sensorsystem bilden. Die Prüfung des Bereichs der Verbindungsfläche und/oder Klappe kann mehrmals pro Sekunde erfolgen.

In einer Variante der vorgestellten Vorrichtung bildet die Verbindungsfläche oder die Klappe selbst den Klärplatz. Das bedeutet, dass auf der Verbindungsfläche oder der Klappe Objekte auch willentlich dort abgelegt werden können. Auch hier könnte eine Abänderung des Vorgangs zum Ablegen des zumindest einen Objekts in das Ziel-Ladehilfsmittel (gemäß Schritt e) das Aufnehmen des Objekts von der Verbindungsfläche, das Ablegen eines Objekts auf einer geneigten Verbindungsfläche (Rutsche) oder das Hochschwenken der Klappe umfassen.

An dieser Stelle wird auch festgehalten, dass sich die zu der vorgestellten Vorrichtung präsentierten Ausführungsvarianten und die daraus resultierenden Vorteile sinngemäß auch für das offenbarte Verfahren beziehen und umgekehrt.

Zum besseren Verständnis der Erfindung wird diese anhand der nachfolgenden Figuren näher erläutert. Es zeigen:
- Fig. 1: ein erstes Beispiel einer Vorrichtung zum Kommissionieren von Waren, bei der im Quell-Ladehilfsmittel, Ziel-Ladehilfsmittel und im Haltebereich des Roboters vorhandenen Objekte mit Hilfe von RFID-Lesegeräten erfasst werden;
- Fig. 2: ähnlich wie Fig. 1, jedoch mit einer Kamera zur Erfassung der genannten Objekte;
- Fig. 3: ähnlich wie Fig. 1, jedoch mit einer Waage zur Erfassung der genannten Objekte und
- Fig. 4: ein Beispiel für eine zwischen einem Quell-Ladehilfsmittel und einem Ziel-Ladehilfsmittel angeordnete, bewegliche Klappe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

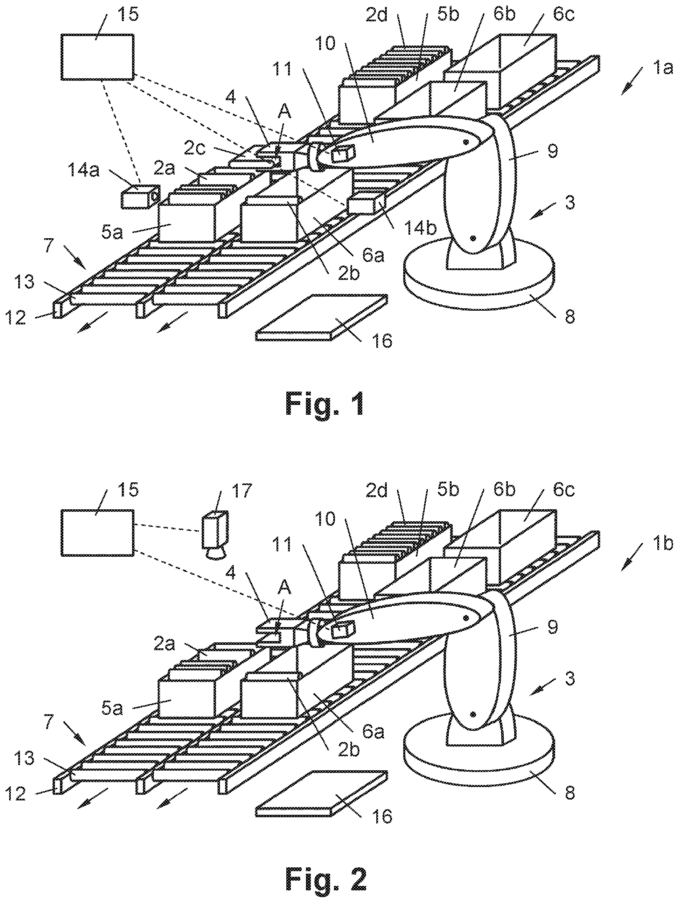

Fig. 1 zeigt ein erstes Beispiel einer Vorrichtung 1a zum Kommissionieren von Waren beziehungsweise Objekten 2a..2d, welche einen Roboter 3 mit Mitteln 4 zur Entnahme zumindest eines Objekts 2a..2d aus einem Quell-Ladehilfsmittel 5a, 5b und zum Ablegen des zumindest einen Objekts 2a..2d in einem Ziel-Ladehilfsmittel 6a..6c umfasst, sowie eine Fördereinrichtung 7 zur Zufuhr des Quell-Ladehilfsmittels 5a, 5b in einen Wirkungsbereich des Roboters 3 und zum Abtransport des Ziel-Ladehilfsmittels 6a..6c aus dem Wirkungsbereich des Roboters 3. Die Fördereinrichtung 7 bildet somit gleichzeitig eine Bereitstelleinrichtung zum Bereitstellen des Quell-Ladehilfsmittels 5a, 5b und des Ziel-Ladehilfsmittels 6a..6c in einem Wirkungsbereich des Roboters 3.

Der Roboter 3 umfasst in diesem Beispiel eine Roboterbasis 8, einen ersten beweglichen Roboterarm 9, einen zweiten beweglichen Roboterarm 10 sowie einen Greifer 4, welcher hier die Mittel 4 zum Entnehmen/Ablegen zumindest eines Objekts 2a..2d bildet. Der Greifer 4 kann zangenförmig ausgebildet sein. Zudem ist ein erstes Sensorsystem 11 zur Überprüfung vorgesehen, ob zumindest ein Objekt 2a..2d durch den Roboter 3 gehalten wird. Das erste Sensorsystem 11 ist in diesem Beispiel auf dem Roboter 3 angeordnet. Grundsätzlich kann das erste Sensorsystem 11 aber auch an einer anderen Stelle der Vorrichtung 1a angeordnet sein.

Die in der Fig. 1 dargestellte Bauform des Roboters 3 als Mehrachsroboter/Knickarmroboter beziehungsweise Industrieroboter ist rein beispielhaft. Stattdessen könnte der Roboter 3 auch als Portalroboter oder auch als Mischform der beiden Bauarten ausgebildet sein. Zudem könnte der Greifer 4 auch finger- beziehungsweise handartig ausgebildet sein. Darüber hinaus könnten anstelle des Greifers 4 oder zusätzlich dazu auch andere Mittel zum Entnehmen/Ablegen zumindest eines Objekts 2a..2d vorgesehen sein, beispielsweise ein Sauggreifer (Vakuum-Greifer) oder mehrere Sauggreifer.

Das erste Sensorsystem 11, welches in der Fig. 1 rein symbolhaft dargestellt ist, könnte beispielsweise einen Ultraschallsensor und/oder, sofern der Roboter 3 mit einem Vakuum-Greifer ausgestattet ist, einen Vakuum-Sensor umfassen. Das erste Sensorsystem 11 kann insbesondere auch dafür ausgebildet sein, nur einen Belegungszustand des Haltebereichs A des Roboters 3 durch zumindest ein Objekt 2a..2d zu ermitteln. Das heißt, das erste Sensorsystem 11 unterscheidet bloß, ob kein Objekt 2a..2d oder wenigstens ein Objekt 2a..2d vom Roboter 3 gehalten wird beziehungsweise im Haltebereich A anwesend ist.

Die Fördereinrichtung 7 zur Zufuhr eines Quell-Ladehilfsmittels 5a, 5b und zum Abtransport eines Ziel-Ladehilfsmittels 6a..6c in den Wirkungsbereich oder Greifbereich des Roboters 3 ist in diesem Beispiel als Rollenförderer mit zwei Förderbahnen an sich bekannter Bauart ausgebildet, welche Rahmenprofile 12 mit dazwischen angeordneten Förderrollen 13 aufweist. Die konkret dargestellte Bauform der Fördereinrichtung 7 ist ebenfalls rein beispielhaft. Beispielsweise könnten die Quell-Ladehilfsmittel 5a, 5b und Ziel-Ladehilfsmittel 6a..6c auch auf andere Weise transportiert werden, beispielsweise auf Förderbändern oder auch mit Hilfe von Flurförderfahrzeugen, insbesondere mit Hilfe von autonomen Flurförderfahrzeugen. Die Förderbahnen könnten darüber hinaus auch anders angeordnet sein, als dies in der Fig. 1 dargestellt ist.

Die Vorrichtung 1a umfasst weiterhin ein zweites Sensorsystem 14a, 14b sowie eine Steuerung 15, welche mit dem ersten Sensorsystem 11 und dem zweiten Sensorsystem 14a, 14b verbunden ist, so wie das in der Fig. 1 mit strichlierten Linien angedeutet ist. Die angesprochene Verbindung kann drahtgebunden sein oder drahtlos erfolgen.

Das erste Sensorsystem umfasst in diesem Beispiel einen Ultraschallsensor 11, und das zweite Sensorsystem umfasst ein erstes RFID-Lesegerät 14a und ein zweites RFID-Lesegerät 14b.

Schließlich umfasst die Vorrichtung 1a auch eine Ablageposition beziehungsweise einen Klärplatz 16, welche(r) an einer von Quell-Ladehilfsmitteln 5a, 5b und Ziel-Ladehilfsmitteln 6a..6c verschiedenen Position angeordnet ist.

In der Fig. 1 befinden sich konkret ein erstes Quell-Ladehilfsmittel 5a und ein erstes Ziel-Ladehilfsmittel 6a im Wirkungsbereich des Roboters 13. Das weitere Quell-Ladehilfsmittel 5b und die weiteren Ziel-Ladehilfsmittel 6b, 6c werden zu einem späteren Zeitpunkt in den Wirkungsbereich des Roboters 13 befördert (siehe auch die in Fig. 1 mit Pfeilen angegebene Förderrichtung). Weiterhin befindet sich in der Fig. 1 konkret ein erstes Objekt 2a im ersten Quell-Ladehilfsmittel 5a, ein zweites Objekt 2b im ersten Ziel-Ladehilfsmittel 6a, ein drittes Objekt 2c im Haltebereich des Roboters 13 und ein viertes Objekt 2d im zweiten Quell-Ladehilfsmittel 5b.

Während des Ablaufs des Kommissionierverfahrens kann aber beispielsweise auch das zweite Quell-Ladehilfsmittel 5b und das dritte Ziel-Ladehilfsmittel 6c in den Wirkungsbereich des Roboters 13 gelangen. Dann kann auch das vierte Objekt 2d in den Haltebereich A oder das dritten Ziel-Ladehilfsmittel 6c gelangen.

Zu verschiedenen Zeitpunkten sind die Quell-Ladehilfsmittel 5a, 5b die Ziel-Ladehilfsmittel 6a..6c und die Objekte 2a..2d also an verschiedenen Orten. Deshalb werden im Folgenden jeweils alle Quell-Ladehilfsmittel 5a, 5b, Ziel-Ladehilfsmittel 6a..6c und Objekte 2a..2d referenziert, das heißt, es wird beispielsweise angegeben, dass sich das Objekt "2a..2d" im Haltebereich A befindet, auch wenn das für den in der Fig. 1 dargestellten Zustand tatsächlich nur für das dritte Objekt 2c zutrifft.

Weiterhin wird darauf hingewiesen, dass insbesondere im Hinblick auf die Quell-Ladehilfsmittel 5a, 5b, Ziel-Ladehilfsmittel 6a..6c und Objekte 2a..2d die Einzahl und Mehrzahl austauschbar gebraucht wird. Generell können ein Objekt 2a..2d oder mehrere Objekte 2a..2d von einem oder mehreren Quell-Ladehilfsmittel(n) 5a, 5b in ein oder mehrere Ziel-Ladehilfsmittel 6a..6c kommissioniert werden. Die Förderrichtung der Fördereinrichtung 7 kann dazu auch umgekehrt werden.

Die Funktion der in der Fig. 1 dargestellten Vorrichtung 1a ist nun wie folgt:
In einem ersten Schritt a) wird mit Hilfe des Roboters 3 zumindest ein Objekt 2a..2d aus dem Quell-Ladehilfsmittel 5a, 5b entnommen. Nach der Entnahme des Objekts 2a..2d aus dem Quell-Ladehilfsmittel 5a, 5b wird mit Hilfe des ersten Sensorsystems 11 geprüft, ob zumindest ein Objekt 2a..2d durch den Roboter 3 gehalten wird (Schritt c). Mit Hilfe des zweiten Sensorsystems 14a, 14b wird eine Anzahl und/oder eine Type des zumindest einen entnommenen Objekts 2a..2d ermittelt.

Ergibt die Prüfung, dass die Anzahl und/oder die Type des zumindest einen aus dem Quell-Ladehilfsmittel 5a, 5b entnommenen Objekts 2a..2d zur Vervollständigung eines Kommissionierauftrages beiträgt, welcher eine Soll-Anzahl und/oder Soll-Type von Objekten 2a..2d im Ziel-Ladehilfsmittel 6a..6c definiert, so wird das zumindest eine Objekt 2a..2d im Ziel-Ladehilfsmittel 6a..6c abgelegt (Schritt b).

Ergibt die Prüfung mit dem ersten Sensorsystem 11, dass kein Objekt 2a..2d durch den Roboter 3 gehalten wird (Fall e1) oder, dass zwar zumindest ein Objekt 2a..2d durch den Roboter 3 gehalten wird, die mit dem zweiten Sensorsystem 14a, 14b erfolgte Prüfung jedoch ergibt, dass die Anzahl und/oder die Type des zumindest einen aus dem Quell-Ladehilfsmittel 5a, 5b entnommenen Objekts 2a..2d nicht zur Vervollständigung des Kommissionierauftrages beiträgt (Fall e2), dann wird der Vorgang zum Ablegen des zumindest einen Objekts 2a..2d im Ziel-Ladehilfsmittel 6a..6c abgebrochen oder abgeändert.

Konkret kann dies dadurch erfolgen, dass im Fall e1) direkt mit Schritt a) fortgesetzt wird. Dementsprechend wird der Ablegevorgang sofort abgebrochen, wenn festgestellt wird, dass vom Roboter 3 überhaupt kein Objekt 2a..2d gehalten wird. Das Kommissionierverfahren ist daher besonders zeiteffizient.

Im Fall e2) kann dies auch dadurch erfolgen, dass alle durch den Roboter 3 gehaltenen Objekte 2a..2d im Quell-Ladehilfsmittel 5a, 5b abgelegt werden und mit Schritt a) fortgesetzt wird. Dementsprechend wird der Entnahmevorgang bei dieser Variante des vorgestellten Kommissionierverfahrens solange wiederholt, bis die aus dem Quell-Ladehilfsmittel 5a, 5b entnommenen Objekte 2a..2d zur Vervollständigung des Kommissionierauftrages beitragen. Das Kommissionierverfahren ist in programmtechnischer beziehungsweise steuerungstechnischer Hinsicht daher besonders einfach.

Alternativ können im Fall e2) alle durch den Roboter 3 gehaltenen Objekte 2a..2d an einer vom Quell-Ladehilfsmittel 5a, 5b und vom Ziel-Ladehilfsmittel 6a..6c verschiedenen Ablageposition 16 abgelegt werden. In einem weiteren Schritt wird ein für das Ziel-Ladehilfsmittel 6a..6c bestimmtes Objekt 2a..2d erfasst und im Ziel-Ladehilfsmittel 6a..6c abgelegt und ein nicht für das Ziel-Ladehilfsmittel 6a..6c bestimmtes Objekt 2a..2d erfasst und im Quell-Ladehilfsmittel 5a, 5b abgelegt. In Folge wird mit Schritt a) fortgesetzt. Bei dieser Variante des vorgestellten Kommissionierverfahrens werden die vom Roboter 3 gehaltenen, jedoch in Summe nicht zur Vervollständigung des Kommissionierauftrages beitragenden Objekte 2a..2d an einer Ablageposition 16 beziehungsweise an einem Klärplatz abgelegt und im Hinblick darauf sortiert, ob diese zur Vervollständigung des Kommissionierauftrages beitragen oder nicht. Nicht zum Auftrag beitragende Objekte 2a..2d werden zurück in das Quell-Ladehilfsmittel 5a, 5b befördert, beitragende Objekte 2a..2d in das Ziel-Ladehilfsmittel 6a..6c. Der Ablauf des Kommissionierverfahrens ist daher besonders effizient.

Das Ablegen der nicht für das Ziel-Ladehilfsmittel 6a..6c bestimmten Objekte 2a..2d im Quell-Ladehilfsmittel 5a, 5b ist vorteilhaft aber nicht zwingend. Denkbar ist auch, dass mit den genannten Objekten 2a..2d anders verfahren wird. Beispielsweise können diese vorerst an der Ablageposition 16 verbleiben und von dort zu einem späteren Zeitpunkt beispielsweise in ein Lager eingelagert werden. Denkbar ist auch, dass an der Ablageposition 16 ein weiteres (drittes) Ladehilfsmittel vorgesehen wird, in das die genannten Objekte 2a..2d abgelegt werden und mit dem diese beispielsweise in ein Lager zurück transportiert werden.

Denkbar ist schließlich auch, dass im Fall e2) alle durch den Roboter 3 gehaltenen Objekte 2a..2d im Ziel-Ladehilfsmittel 6a..6c abgelegt werden, ein nicht für das Ziel-Ladehilfsmittel 6a..6c bestimmtes Objekt 2a..2d aus dem Ziel-Ladehilfsmittel 6a..6c entnommen und im Quell-Ladehilfsmittel 5a, 5b abgelegt wird und in Folge mit Schritt a) fortgesetzt wird. Bei dieser Variante des vorgestellten Kommissionierverfahrens wird der Ablagevorgang in jedem Fall durchgeführt. Wird sodann festgestellt, dass das Ziel-Ladehilfsmittel 6a..6c auch solche Objekte 2a..2d enthält, die nicht zur Vervollständigung des Kommissioniervorgangs beitragen, dann werden diese Objekte 2a..2d wieder aus dem Ziel-Ladehilfsmittel 6a..6c entfernt und im Quell-Ladehilfsmittel 5a, 5b abgelegt.

Der Roboter 3 führt einen Kommissioniervorgang also dadurch aus, dass er beispielsweise einen als Ziel-Ladehilfsmittel 6a..6c fungierenden Versandkarton mit den von einem Kunden bestellten Waren beziehungsweise Objekten 2a..2d befüllt. Dies kann mit einem Durchlauf der Schritte a) bis e) erfolgen oder auch durch rekursives Wiederholen der genannten Schritte a) bis e). Bei jedem Durchlauf wird geprüft, ob die Anzahl und/oder die Type der aus dem Quell-Ladehilfsmittel 5a, 5b entnommenen Objekte 2a..2d zur Vervollständigung eines Kommissionierauftrages beitragen, das heißt ob die Anzahl des zumindest einen aus dem Quell-Ladehilfsmittel 5a, 5b entnommenen Objekts 2a..2d kleiner als die oder gleich der Differenz zwischen der Soll-Anzahl und der Ist-Anzahl der im Ziel-Ladehilfsmittel 6a..6c enthaltenen Objekte 2a..2d ist. Zusätzlich oder alternativ sollten die Typen der aus dem Quell-Ladehilfsmittel 5a, 5b entnommenen Objekte 2a..2d mit den Typen der im Ziel-Ladehilfsmittel 6a..6c noch fehlenden Objekte 2a..2d übereinstimmen.

Der Ablauf des Kommissioniervorgangs und insbesondere die Prüfung, ob ein Objekt 2a..2d durch den Roboter 3 gehalten wird und ob die Anzahl und/oder die Type des zumindest einen aus dem Quell-Ladehilfsmittel 5a, 5b entnommenen Objekts 2a..2d zur Vervollständigung eines Kommissionierauftrages beiträgt, wird durch die Steuerung 15 erledigt, konkret im Zusammenwirken mit dem ersten Sensorsystem 11 und dem zweiten Sensorsystem 14a, 14b.

Die Prüfung mit dem ersten Sensorsystem 11 erfolgt in einer Variante des vorgestellten Verfahrens nur einmal pro Durchlauf der Schritte a) bis e). Auf diese Weise benötigt das vorgestellte Verfahren nur wenig Rechenleistung. Denkbar ist aber auch, dass die Prüfung mit dem ersten Sensorsystem 11 mehrmals je Durchlauf der Schritte a) bis e) erfolgt. Auf diese Weise kann insbesondere zeitnah festgestellt werden, ob der Roboter 3 ein Objekt 2a..2d t unbeabsichtigt fallen gelassen hat und damit der Fall e1) eintritt.

In dem in Fig. 1 dargestellten Beispiel sind die Objekte 2a..2d mit RFID-Tags ausgestattet, auf denen die Type eines Objekts 2a..2d gespeichert ist oder ein Verweis in eine Datenbank, in der die besagte Type gespeichert ist.

Durch die Verwendung von RFID-Tags kann die Anzahl und/oder die Type der im Quell-Ladehilfsmittel 5a, 5b, im Haltebereich A des Roboters 3 und/oder im Ziel-Ladehilfsmittel 6a..6c vorhandenen Objekte 2a..2d besonders gut ermittelt werden. Im Grunde braucht dazu nur die auf den RFID-Tags gespeicherte Information (z.B. Type = Vollmilch 3,5%, Gewicht = 1 kg, Breite = 7 cm, Tiefe = 7 cm, Höhe = 20 cm) ausgewertet werden. Auf diese Weise kann festgestellt werden, welche Objekte 2a..2d dem Quell-Ladehilfsmittel 5a, 5b entnommen und welche Objekte 2a..2d im Ziel-Ladehilfsmittel 6a..6c abgelegt werden.

In dem in Fig. 1 dargestellten Beispiel umfasst der Lesebereich des ersten RFID-Lesegeräts 14a das Quell-Ladehilfsmittel 5a. Das Ziel-Ladehilfsmittel 6a und der Haltebereich A des Roboters 3 wird jedoch nicht erfasst. Demzufolge kann mit den Informationen, welche mit dem ersten RFID-Lesegerät 14a aus den RFID-Tags ausgelesen werden, die Anzahl und/oder die Type des zumindest einen aus dem Quell-Ladehilfsmittel 5a entnommenen Objekts 2a..2d ermittelt werden.

In analoger Weiser umfasst der Lesebereich des zweiten RFID-Lesegerät 14b in dem in Fig. 1 dargestellten Beispiel das Ziel-Ladehilfsmittel 6a. Das Quell-Ladehilfsmittel 5a, und der Haltebereich A des Roboters 3 wird jedoch nicht erfasst. Demzufolge kann mit den Informationen, welche mit dem zweiten RFID-Lesegerät 14b aus den RFID-Tags ausgelesenen werden, die Anzahl und/oder die Type des zumindest einen in das Ziel-Ladehilfsmittel 6a abgelegten Objekts 2a..2d ermittelt werden.

Das zweite Sensorsystem 14a, 14b ist in diesem Beispiel stationär, und für das Quell-Ladehilfsmittel 5a, 5b und das Ziel-Ladehilfsmittel 6a..6c ist je ein RFID-Lesegerät 14a, 14b vorgesehen. Denkbar wäre auch, dass ein gemeinsames RFID-Lesegerät für das Quell-Ladehilfsmittel 5a, 5b und das Ziel-Ladehilfsmittel 6a..6c vorgesehen ist. In diesem Fall kann das gemeinsame RFID-Lesegerät für einen Lesevorgang zum Quell-Ladehilfsmittel 5a, 5b hin und vom Ziel-Ladehilfsmittel 6a..6c wegbewegt werden und umgekehrt. Denkbar wäre auch, dass das Quell-Ladehilfsmittel 5a, 5b zum RFID-Lesegerät hin und das Ziel-Ladehilfsmittel 6a..6c vom RFID-Lesegerät wegbewegt wird und umgekehrt. Diese Bewegung kann beispielsweise mit Hilfe der Fördereinrichtung 7 erfolgen.

Denkbar ist insbesondere auch, dass das zweite Sensorsystem ein drittes RFID-Lesegerät aufweist, dass ein an einem bewegten Teil des Roboters 3 angeordnet ist. Beispielsweise kann das dritte RFID-Lesegerät am zweiten Roboterarm 10 angeordnet sein, so wie das in der Fig. 1 für das erste Sensorsystem 11 der Fall ist. Ein am zweiten Roboterarm 10 angeordnetes RFID-Lesegerät kann aber auch Teil des ersten Sensorsystems sein oder dieses bilden.

Das dritte RFID-Lesegerät kann zum Quell-Ladehilfsmittel 5a, 5b hinbewegt werden, um die im Quell-Ladehilfsmittel 5a, 5b enthaltenen Objekte 2a..2d zu erfassen. Das Ziel-Ladehilfsmittel 6a wird dabei vom Lesebereich des dritten RFID-Lesegeräts ausgeschlossen.

Das dritte RFID-Lesegerät kann aber auch zum Ziel-Ladehilfsmittel 6a..6c hinbewegt werden, um die im Ziel-Ladehilfsmittel 6a..6c enthaltenen Objekte 2a..2d zu erfassen. Dann wird das Quell-Ladehilfsmittel 5a, 5b vom Lesebereich des dritten RFID-Lesegeräts ausgeschlossen.

Der Lesebereich des dritten RFID-Lesegeräts kann auch den Haltebereich A des Roboters 3 umfassen. Für eine Erfassung der im Haltebereich A des Roboters 3 gehaltenen Objekte 2a..2d wird das dritte RFID-Lesegerät vom Quell-Ladehilfsmittel 5a, 5b und vom Ziel-Ladehilfsmittel 6a..6c wegbewegt, um das Quell-Ladehilfsmittel 5a, 5b und das Ziel-Ladehilfsmittel 6a..6c vom Lesebereich des dritten RFID-Lesegeräts anzuschließen.

In ganz analoger Weise kann der Haltebereich A des Roboters 3 auch in den Lesebereich des ersten RFID-Lesegeräts 14a oder in den Lesebereich des zweiten RFID-Lesegeräts 14b bewegt werden, um die im Haltebereich A anwesenden Objekte 2a..2d zu erfassen. Das Quell-Ladehilfsmittel 5a, 5b und/oder das Ziel-Ladehilfsmittel 6a..6c kann dabei dementsprechend aus dem Lesebereich des ersten RFID-Lesegeräts 14a / zweiten RFID-Lesegeräts 14b wegbewegt werden.

Aus dem oben Gesagten geht insbesondere hervor, dass im Grunde nur ein einziges RFID-Lesegerät benötigt wird, um die im Quell-Ladehilfsmittel 5a, 5b, im Ziel-Ladehilfsmittel 6a..6c und im Haltebereich A befindlichen Objekte 2a..2d zu identifizieren.

Die im Haltebereich A des Roboters 3 gehaltenen Objekte 2a..2d respektive die vom Roboter 3 abgelegten Objekte 2a..2d können über eine Differenzbildung zweier Lesevorgänge ermittelt werden. Am Roboter 3 selbst brauchen dann keine Mittel zur Ermittlung der Anzahl und/oder der Type von Objekten 2a..2d vorgesehen sein.

Beispielsweise können die im Quell-Ladehilfsmittel 5a, 5b enthaltenen Objekte 2a..2d mit Hilfe des ersten RFID-Lesegerät 14a vor und nach der Entnahme des zumindest einen Objekts 2a..2d erfasst werden. In Folge kann die Anzahl und/oder die Type des zumindest einen aus dem Quell-Ladehilfsmittel 5a, 5b entnommenen Objekts 2a..2d anhand einer ermittelten Differenz der bei den beiden Lesevorgängen erfassten Objekte 2a..2d bestimmt werden.

Denkbar ist auch, dass die im Ziel-Ladehilfsmittel 6a..6c enthaltenen Objekte 2a..2d mit Hilfe des zweiten RFID-Lesegerät 14b vor und nach dem Ablegen des zumindest einen Objekts 2a..2d erfasst werden und dass die Anzahl und/oder die Type des zumindest einen im Ziel-Ladehilfsmittel 6a..6c abgelegten Objekts 2a..2d anhand einer ermittelten Differenz der bei den beiden Lesevorgängen erfassten Objekte 2a..2d bestimmt wird.

Generell kann vorgesehen sein, dass der Roboter 3 für den Entnahmevorgang angewiesen wird, eine genaue Anzahl von Objekten 2a..2d und/oder ein bestimmtes Objekt 2a..2d oder bestimmte Objekte 2a..2d aus dem Quell-Ladehilfsmittel 5a, 5b zu entnehmen. Auf diese Weise ist der Ablauf des Kommissioniervorgangs gut planbar beziehungsweise vorhersehbar. Im Regelfall und ohne Auftreten eines unvorhergesehenen Ereignisses entnimmt der Roboter 3 immer jene Objekte 2a..2d aus dem Quell-Ladehilfsmittel 5a, 5b, welche zur Vervollständigung des Kommissionierauftrages beitragen.

Grundsätzlich ist der Ausgang der Prüfung gemäß Punkt e2) unabhängig davon, ob die Anzahl der entnommenen Objekte 2a..2d tatsächlich der vorgegebenen Anzahl der Objekte 2a..2d entspricht. Beispielsweise kann geplant sein, dass der Roboter 3 in drei Schritten jeweils ein Objekt 2a..2d aus dem Quell-Ladehilfsmittel 5a, 5b entnimmt und im Ziel-Ladehilfsmittel 6a..6c ablegt, also 1 + 1 + 1 Objekte 2a..2d. Erwischt der Roboter 3 im ersten Schritt tatsächlich ein Objekt 2a..2d, im zweiten Schritt aber zwei Objekte 2a..2d, also 1 + 2 Objekte 2a..2d, dann dient das dennoch der Vervollständigung des Auftrags. Ebenso würde die Abfolge 2 + 1 Objekte 2a..2d den Auftrag vervollständigen, nicht jedoch beispielsweise die Abfolge 2 + 2 Objekte 2a..2d.

Ähnliches gilt für die Objekttypen/Objektarten. Zwar kann der Roboter 3 beispielsweise angewiesen werden, ein grünes Objekt 2a..2d vom Quell-Ladehilfsmittel 5a, 5b zu entnehmen und in das Ziel-Ladehilfsmittel 6a..6c abzulegen, erwischt er aber tatsächlich ein gelbes Objekt 2a..2d und fehlt auch noch ein gelbes Objekt 2a..2d zur Vervollständigung des Auftrags, dann braucht der Vorgang zum Ablegen des zumindest einen Objekts 2a..2d in das Ziel-Ladehilfsmittel 6a..6c nicht abgebrochen oder abgeändert werden. Grundsätzlich ist der Ausgang der Prüfung gemäß Punkt e2) also auch unabhängig davon, ob die Art der entnommenen Objekte 2a..2d tatsächlich der vorgegebenen Art der Objekte 2a..2d entspricht.

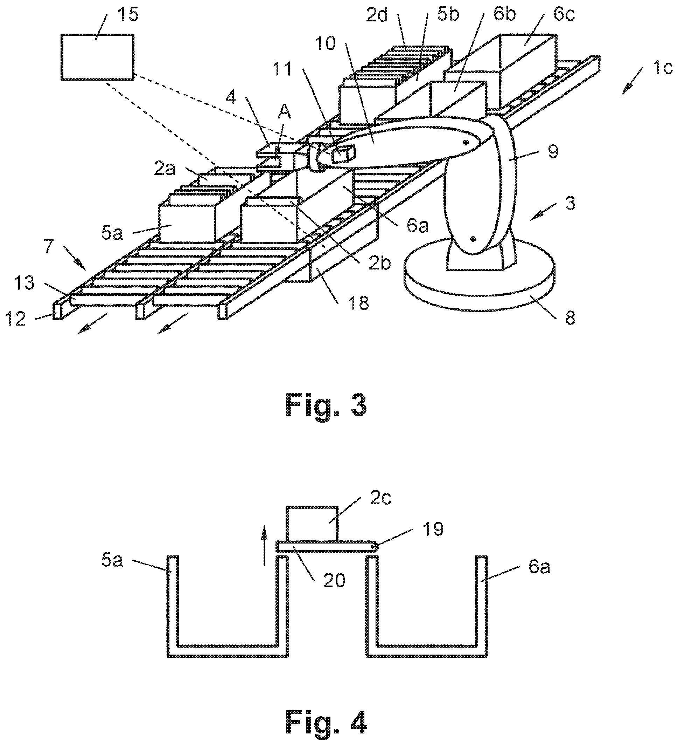

Wie bereits erwähnt sind die Objekttypen nicht auf Farben beschränkt, sondern für die Bestimmung einer Objekttype können alternativ oder zusätzlich auch andere Objekteigenschaften herangezogen werden, beispielsweise ein Grauwert, eine Oberflächenstruktur / ein Oberflächenmuster, eine geometrische Form oder Abmessungen des Objekts 2a..2d. Insbesondere bei der Verwendung von Kameras 17 (vergleiche Fig.2), die nur Grauwerte liefern, steht ja keine Farbinformation zur Verfügung. Auch das Gewicht eines Objekts 2a..2d kann als relevante Objekteigenschaft herangezogen werden (vergleiche Fig. 3).

Denkbar ist aber auch, dass der Roboter 3 für den Entnahmevorgang angewiesen wird, eine beliebige Anzahl von Objekten 2a..2d und/oder irgendein Objekt 2a..2d oder irgendwelche Objekte 2a..2d aus dem Quell-Ladehilfsmittel 5a, 5b zu entnehmen. Dadurch ist der Entnahmevorgang programmtechnisch beziehungsweise steuerungstechnisch leicht durchzuführen, da dieser an keine Vorgaben gebunden ist. Eine Prüfung, ob die Anzahl und/oder die Type eines aus einem Quell-Ladehilfsmittel 5a, 5b entnommenen Objekts 2a..2d zur Vervollständigung des Kommissionierauftrages beiträgt, erfolgt bei dieser Variante grundsätzlich erst nach dem Entnehmen der Objekte 2a..2d aus dem Quell-Ladehilfsmittel 5a, 5b.

Die Entnahme kann auch auf einen Zahlenbereich eingeschränkt werden. Beispielsweise kann vorgesehen sein, dass der Roboter 3 für den Entnahmevorgang angewiesen wird, eine beliebige Anzahl von Objekten 2a..2d aus einem Zahlenbereich zu entnehmen, also zum Beispiel 1 bis 3 Objekte 2a..2d. Auch hier ist der Ausgang der Prüfung gemäß Punkt e2) unabhängig davon, ob die Anzahl der entnommenen Objekte 2a..2d tatsächlich im vorgegebenen Bereich liegt. Wird vorgegeben, 1 bis 3 Objekte 2a..2d zu entnehmen, werden aber tatsächlich 4 Objekte 2a..2d ergriffen, dann dient dies dann der Vervollständigung eines Auftrags, wenn noch 4 oder mehr Objekte 2a..2d im Ziel-Ladehilfsmittel 6a..6c fehlen.

Die Entnahme kann auch auf einen Bereich an Objekttypen/Objektarten eingeschränkt werden. Beispielsweise kann der Roboter 3 angewiesen werden, grüne oder gelbe Objekte 2a..2d vom Quell-Ladehilfsmittel 5a, 5b in das Ziel-Ladehilfsmittel 6a..6c zu befördern. Erwischt er aber tatsächlich ein blaues Objekt 2a..2d und fehlt auch noch ein blaues Objekt 2a..2d zur Vervollständigung des Auftrags, dann braucht der Vorgang zum Ablegen des zumindest einen Objekts 2a..2d in das Ziel-Ladehilfsmittel 6a..6c nicht abgebrochen oder abgeändert werden. Grundsätzlich ist der Ausgang der Prüfung gemäß Punkt e2) also auch hier unabhängig davon, ob die Art der entnommenen Objekte 2a..2d tatsächlich der vorgegebenen Art der Objekte 2a..2d entspricht.

Ebenso kann die Vorgabe örtlich eingegrenzt werden. Beispielsweise kann vorgegeben werden, ein Objekt 2a..2d von einer genauen Position oder aus einem Bereich des Quell-Ladehilfsmittels 5a, 5b zu entnehmen, also zum Beispiel aus der linken oberen Ecke. Ähnliches gilt für die Ablage im Ziel-Ladehilfsmittel 6a..6c. Beispielsweise kann vorgegeben werden, ein Objekt 2a..2d an einer genauen Position oder in einem Bereich des Ziel-Ladehilfsmittels 6a..6c abzulegen, also zum Beispiel mittig.

Denkbar ist auch eine Kombination der vorgeschlagenen Varianten. Demgemäß kann die Vorgabe beispielsweise lauten, 1 bis 3 gelbe oder grüne Objekte 2a..2d aus dem linken oberen Eckbereich des Quell-Ladehilfsmittels 5a, 5b zu entnehmen und in einem Mittenbereich des Ziel-Ladehilfsmittels 6a..6c abzulegen.

In einer weiteren Variante des Kommissionierverfahrens kann geprüft werden, ob ein Vergleich der ermittelten Anzahl und/oder der ermittelten Type des zumindest einen aus dem Quell-Ladehilfsmittel 5a, 5b entnommenen Objekts 2a..2d eine Abweichung zu der ermittelten Anzahl und/oder der ermittelten Type des zumindest einen vom Roboter 3 gehaltenen Objekts 2a..2d ergibt. Trifft dies zu, so wird wie nach dem Auftreten des Falls e2) verfahren, und/oder es wird ein Alarm, insbesondere eine Alarmmeldung an einen übergeordneten Rechner, ausgegeben. Auf diese Weise kann geprüft werden, ob alle vom Roboter 3 aus dem Quell-Ladehilfsmittel 5a, 5b entnommenen Objekte 2a..2d auch vom Roboter 3 gehalten werden, oder ob eine Abweichung festgestellt wird, und demzufolge Objekte 2a..2d ungewollt vom Roboter 3 heruntergefallen oder auf andere Weise verloren gegangen sind.

In analoger Weise kann auch geprüft werden, ob
- ein Vergleich der ermittelten Anzahl und/oder der ermittelten Type des zumindest einen aus dem Quell-Ladehilfsmittel 5a, 5b entnommenen Objekts 2a..2d eine Abweichung zu der ermittelten Anzahl und/oder der ermittelten Type des zumindest einen im Ziel-Ladehilfsmittel 6a..6c abgelegten Objekts 2a..2d ergibt und/oder
- ein Vergleich der ermittelten Anzahl und/oder der ermittelten Type des zumindest einen vom Roboter 3 gehaltenen Objekts 2a..2d eine Abweichung zu der ermittelten Anzahl und/oder der ermittelten Type des zumindest einen im Ziel-Ladehilfsmittel 6a..6c abgelegten Objekts 2a..2d ergibt.

Auch in diesen Fällen kann wie nach dem Auftreten des Falls e2) verfahren werden, und/oder es wird ein Alarm, insbesondere eine Alarmmeldung an einen übergeordneten Rechner, ausgegeben. Auf diese Weise kann geprüft werden, ob alle vom Roboter 3 aus dem Quell-Ladehilfsmittel 5a, 5b entnommenen Objekte 2a..2d beziehungsweise alle vom Roboter 3 gehaltenen Objekte 2a..2d auch im Ziel-Ladehilfsmittel 6a..6c abgelegt werden, oder ob eine Abweichung festgestellt wird, und demzufolge Objekte 2a..2d neben dem Ziel-Ladehilfsmittel 6a..6c heruntergefallen sind.

Fig. 2 zeigt nun eine weitere Ausführungsform einer Kommissioniervorrichtung 1b, welcher der in Fig. 1 dargestellten Kommissioniervorrichtung 1a sehr ähnlich ist. Im Unterschied dazu, ist aber anstelle der RFID-Lesegeräte 14a, 14b eine Kamera 17 vorgesehen, welche den Inhalt des Quell-Ladehilfsmittels 5a, 5b und des Ziel-Ladehilfsmittels 6a..6c erfasst. Zusätzlich zu der Kamera 17 oder alternativ dazu kann auch ein 3D-Sensor beziehungsweise Raumtiefensensor vorgesehen sein.

Ähnlich wie bei der Verwendung von RFID-Lesegeräten 14a, 14b werden die Anzahl und/oder die Type der aus dem Quell-Ladehilfsmittel 5a, 5b entnommenen, der im Haltebereich A vorhandenen und/oder der im Ziel-Ladehilfsmittel 6a..6c abgelegten Objekte 2a..2d durch Differenzbildung zweier Erfassungsvorgänge ermittelt, hier durch Erfassen zweier Abbilder zu verschiedenen Zeitpunkten beziehungsweise in verschiedenen Zuständen der Kommissioniervorrichtung 1b.

Konkret erfolgt dies dadurch, dass
- die Anzahl und/oder die Type des zumindest einen aus dem Quell-Ladehilfsmittel 5a, 5b entnommenen Objekts 2a..2d durch einen Vergleich eines vor und eines nach dem Entnahmevorgang erfassten Abbildes eines Inhalts des Quell-Ladehilfsmittels 5a, 5b ermittelt wird und/oder
- die Anzahl und/oder die Type des zumindest einen im Ziel-Ladehilfsmittel 6a..6c abgelegten Objekts 2a..2d durch einen Vergleich eines vor und eines nach dem Ablegevorgang erfassten Abbildes eines Inhalts des Ziel-Ladehilfsmittels 6a..6c ermittelt wird und/oder
- die Anzahl und/oder die Type des zumindest einen vom Roboter 3 gehaltenen Objekts 2a..2d anhand eines vom Haltebereich A des Roboters 3 erfassten Abbilds ermittelt wird.

Im Übrigen gilt das für die in der Fig. 1 dargestellte Kommissioniervorrichtung 1a Gesagte sinngemäß auch für die Kommissioniervorrichtung 1b.

Insbesondere ist auch bei dieser Ausführungsform denkbar, dass das zweite Sensorsystem eine Kamera aufweist, die an einem bewegten Teil des Roboters 3 angeordnet ist. Beispielsweise kann die Kamera am zweiten Roboterarm 10 angeordnet sein, so wie das in der Fig. 1 für das erste Sensorsystem 11 der Fall ist. Eine am zweiten Roboterarm 10 angeordnete Kamera kann aber auch Teil des ersten Sensorsystems sein oder dieses bilden.

Durch entsprechendes Ausrichten der Kamera kann wiederum der Inhalt des Quell-Ladehilfsmittels 5a, 5b, des Ziel-Ladehilfsmittels 6a..6c und auch des Haltebereichs A erfasst werden. Auch kann der Haltebereich A in den Erfassungsbereich der Kamera 17 bewegt werden, um die dort anwesenden Objekte 2a..2d zu identifizieren.

Aus dem oben Gesagten geht wiederum hervor, dass im Grunde nur eine einzige Kamera 17 benötigt wird, um die im Quell-Ladehilfsmittel 5a, 5b, im Ziel-Ladehilfsmittel 6a..6c und im Haltebereich A befindlichen Objekte 2a..2d zu identifizieren.

Fig. 3 zeigt nun eine weitere Ausführungsform einer Kommissioniervorrichtung 1c, welcher der in Fig. 1 dargestellten Kommissioniervorrichtung 1a und auch der in Fig. 2 dargestellten Kommissioniervorrichtung 1b sehr ähnlich ist. Im Unterschied dazu ist für das zweite Sensorsystem nun aber eine Waage 18 vorgesehen, welche den Inhalt des Quell-Ladehilfsmittels 5a, 5b und des Ziel-Ladehilfsmittels 6a..6c erfasst. In diesem Beispiel erstreckt sich die Waage 18 zu diesem Zweck über beide Förderbahnen der Fördereinrichtung 3, was zwar vorteilhaft, jedoch nicht zwingend ist. Ein weiterer Unterschied besteht darin, dass die Kommissioniervorrichtung 1c keinen Klärplatz 16 aufweist. Selbstverständlich kann die Kommissioniervorrichtung 1c aber einen solchen aufweisen.

Auch bei der in der Fig. 3 dargestellten Kommissioniervorrichtung 1c kann die Anzahl und/oder die Type der aus dem Quell-Ladehilfsmittel 5a, 5b entnommenen, der im Haltebereich A vorhandenen und/oder der im Ziel-Ladehilfsmittel 6a..6c abgelegten Objekte 2a..2d durch Differenzbildung zweier Erfassungsvorgänge ermittelt werden, hier durch Erfassen eines Gewichts zu verschiedenen Zeitpunkten beziehungsweise in verschiedenen Zuständen der Kommissioniervorrichtung 1c. Die für die Waage 18 relevante Objekteigenschaft ist also das Gewicht eines Objekts 2a..2d.

Konkret kann dies dadurch erfolgen, dass das Quell-Ladehilfsmittel 5a, 5b vor und nach der Entnahme des zumindest einen Objekts 2a..2d gewogen wird und dass die Anzahl und/oder die Type des zumindest einen aus dem Quell-Ladehilfsmittel 5a, 5b entnommenen und in Folge vom Roboter 3 im Haltebereich A gehaltenen Objekts 2a..2d anhand eines gemessenen Differenzgewichts ermittelt wird. Dementsprechend kann auch das Ziel-Ladehilfsmittel 6a..6c vor und nach dem Ablegen des zumindest einen Objekts 2a..2d gewogen werden, und die Anzahl und/oder die Type des zumindest einen im Ziel-Ladehilfsmittel 6a..6c abgelegten Objekts 2a..2d wird anhand eines gemessenen Differenzgewichts ermittelt.

Grundsätzlich funktioniert das beschriebene Verfahren mit einer gemeinsamen Waage 18 für das Quell-Ladehilfsmittel 5a, 5b und das Ziel-Ladehilfsmittel 6a..6c. In einer vorteilhaften Variante der Kommissioniervorrichtung 1c sind aber gesonderte Waagen für mehrere oder je ein Quell-Ladehilfsmittel 5a, 5b und mehrere oder je ein Ziel-Ladehilfsmittel 6a..6c vorgesehen.

Denkbar ist weiterhin, dass die vom Roboter 3 gehaltene Gewichtskraft durch einen entsprechenden Sensor ermittelt wird, welcher Teil des ersten oder zweiten Sensorsystems ist. Auf diese Weise kann ein vom Roboter 3 gehaltenes Gewicht gemessen und die Anzahl und/oder die Type des zumindest einen vom Roboter 3 gehaltenen Objekts 2a..2d anhand eines gemessenen Differenzgewichts ermittelt werden. Denkbar ist aber auch, dass das Quell-Ladehilfsmittel 5a, 5b oder das Ziel-Ladehilfsmittel 6a..6c vom Roboter 3 angehoben wird, um das Gewicht der darin enthaltenen Objekte 2a..2d zu ermitteln.

Eine Voraussetzung für die Ermittlung der Anzahl und/oder der Type der im Quell-Ladehilfsmittel 5a, 5b, im Ziel-Ladehilfsmittel 6a..6c und/oder im Haltebereich A des Roboters 3 vorhandenen Objekte 2a..2d ist die Kenntnis des Gewichts eines im Quell-Ladehilfsmittel 5a, 5b enthaltenen Objekts 2a..2d. Beispielsweise wird dieses einem übergeordneten Rechner bei einem Wareneingang mitgeteilt oder von diesem ermittelt. Generell kann davon ausgegangen werden, dass die in einem Quell-Ladehilfsmittel 5a, 5b enthaltenen Objekte 2a..2d in einem Warenlagersystem bekannter Bauart im Hinblick auf Type und Anzahl grundsätzlich bekannt ist.

Insbesondere kann die Anzahl und/oder die Type des zumindest einen aus dem Quell-Ladehilfsmittel 5a, 5b entnommenen Objekts 2a..2d und/oder im Ziel-Ladehilfsmittel 6a..6c abgelegten Objekts 2a..2d und/oder vom Roboter 3 gehaltenen Objekts 2a..2d dadurch ermittelt werden, dass nach einer Kombination von im Quell-Ladehilfsmittel 5a, 5b enthaltenen Objekten 2a..2d gesucht wird, deren Gesamtgewicht einem ermittelten Differenzgewicht im Wesentlichen gleicht.

Als Basis für diese Berechnung kann die Gesamtzahl von Objekten 2a..2d, welche in einem Entnahmevorgang durch den Roboter 3 aus dem Quell-Ladehilfsmittel 5a, 5b entnommen werden können, herangezogen werden. Ist diese Gesamtzahl nicht bekannt, so kann - unter der Annahme, dass der Roboter 3 nicht mehr Objekte 2a..2d aus dem Quell-Ladehilfsmittel 5a, 5b entnehmen kann - eine Gesamtzahl von fünf Objekten 2a..2d als Basis für die Berechnung herangezogen werden.

Sind die Objekte 2a..2d im Quell-Ladehilfsmittel 5a, 5b sortenrein und haben demzufolge alle dasselbe Gewicht, so kann die Anzahl der aus dem Quell-Ladehilfsmittel 5a, 5b entnommenen Objekte 2a..2d und/oder die Anzahl der im Ziel-Ladehilfsmittel 6a..6c abgelegten Objekte 2a..2d und/oder die Anzahl und/oder die Type der vom Roboter 3 gehaltenen Objekte 2a..2d mittels einer Division des gemessenen Differenzgewichts durch das Gewicht eines Objekts 2a..2d ermittelt werden.

In einer vorteilhaften Variante des vorgeschlagenen Verfahrens wird dementsprechend das Differenzgewicht durch das Gesamtgewicht jeder Kombination von im Quell-Ladehilfsmittel 5a, 5b enthaltenen Objekten 2a..2d bis zu einer Gesamtzahl von fünf Objekten 2a..2d oder bis zu einer Gesamtzahl von Objekten 2a..2d, welche in einem Entnahmevorgang durch den Roboter 3 aus dem Quell-Ladehilfsmittel 5a, 5b entnommen werden können, dividiert. Die gesuchte Kombination ist in Folge jene, welcher der am nächsten bei Eins liegende Wert zugeordnet ist.

Um sicherzustellen, dass der ermittelte Quotient nahe genug bei Eins liegt und das ermittelte Ergebnis daher sicher ist, wird wie beim Auftreten des Falls e2) verfahren, wenn der am nächsten bei Eins liegende Wert eine über einem ersten Schwellwert liegende Abweichung aufweist. Das heißt der Vorgang zum Ablegen eines Objekts 2a..2d im Ziel-Ladehilfsmittel 6a..6c wird dann abgebrochen oder abgeändert.

Zu demselben Zweck kann zusätzlich oder alternativ der Abstand zu jenem Quotienten ermittelt werden, welcher am zweitnächsten zu Eins liegt. Ist der Abstand zu gering, so kann nicht mit Sicherheit gesagt werden, welcher der beiden Quotienten (nämlich der am nächsten oder der am zweitnächsten bei Eins liegende Quotient) der richtige ist, das heißt die tatsächlich dem Quell-Ladehilfsmittel entnommenen Objekte angibt. Ist der Abstand hinreichend groß, so gibt der am nächsten bei Eins liegende Quotient tatsächlich die dem Quell-Ladehilfsmittel 5a, 5b entnommenen Objekte 2a..2d an. Dementsprechend wird wie beim Auftreten des Falls e2) verfahren, wenn der am nächsten bei Eins liegende Wert eine unter einem zweiten Schwellwert liegende Abweichung vom zweitnächsten Wert aufweist.

Besonders vorteilhaft ist es auch, wenn sich das Gesamtgewicht jeder Kombination von Objekten 2a..2d bis zu einer Gesamtzahl von fünf Objekten 2a..2d oder bis zu einer Gesamtzahl von Objekten 2a..2d, welche in einem Entnahmevorgang durch den Roboter 3 aus dem Quell-Ladehilfsmittel 5a, 5b entnommen werden können, voneinander unterscheidet. Auf diese Weise wird sichergestellt, dass jede Kombination von Objekten 2a..2d ein eindeutiges Gesamtgewicht aufweist und es keine Kombinationen von Objekten 2a..2d gibt, die (im Wesentlichen) das gleiche Gesamtgewicht aufweisen. Die aus dem Quell-Ladehilfsmittel 5a, 5b entnommenen, im Haltebereich A befindlichen und/oder im Ziel-Ladehilfsmittel 6a..6c abgelegten Objekte 2a..2d können somit eindeutig identifiziert werden. Grundsätzlich funktioniert das vorgestellte Kommissionierverfahren aber auch dann, wenn nicht jede Kombination von Objekten 2a..2d ein eindeutiges Gesamtgewicht aufweist. Gegebenenfalls ist dann eine Fehlerbehandlung nach dem Fall e2) durchzuführen.

Ein trivialer Fall für eindeutige Gesamtgewichte ist dann gegeben, wenn im Quell-Ladehilfsmittel 5a, 5b nur eine Type von Objekten 2a..2d enthalten ist. Die sortenreine Aufbewahrung der Objekte 2a..2d in den Quell-Ladehilfsmitteln 5a, 5b ist aber auch für die in den Figuren 1 und 2 dargestellten Kommissioniervorrichtungen 1a und 1b von Vorteil, da dann die Ermittlung einer Type eines Objekts 2a..2d während des Kommissionierens entfallen kann, sondern nur die Anzahl der aus dem Quell-Ladehilfsmittel 5a, 5b entnommenen, im Haltebereich A des Roboters 3 anwesenden und/oder der im Ziel-Ladehilfsmittel 6a..6c abgelegten Objekte 2a..2d ermittelt werden braucht.

In einer besonders vorteilhaften (und real ausgeführten) Variante der Kommissioniervorrichtung 1a..1c ist der Roboter 3 mit drei Vakuum-Sauggreifern ausgestattet, und das erste Sensorsystem 11 umfasst einen Ultraschallsensor und drei Vakuum-Sensoren, mit denen (nur) der Belegungszustand des Haltebereichs A des Roboters 3 durch zumindest ein Objekt 2a..2d ermittelt werden kann. Das zweite Sensorsystem umfasst zwei getrennte Waagen 18, eine erste Waage zum Wiegen des Quell-Ladehilfsmittels 5a, 5b und eine zweite Waage zum Wiegen des Ziel-Ladehilfsmittels 6a..6c. Das zweite Sensorsystem ist demnach stationär und erfasst das Gewicht des Quell-Ladehilfsmittels 5a, 5b und der darin enthaltenen Objekte 2a..2d und das Gewicht des Ziel-Ladehilfsmittels 6a..6c und der darin enthaltenen Objekte 2a..2d. Die Kommissioniervorrichtung 1a..1c umfasst auch eine Kamera und/oder ein 3D-System, um die Entnahmeposition(Greifposition)/Ablageposition für den Roboter 3 festzulegen, nicht jedoch um Anzahl/Type der entnommenen Objekte 2a..2d festzustellen. Schließlich weist die Kommissioniervorrichtung 1a..1c auch eine Fördereinrichtung 7 zum An- und Abtransport des Quell-Ladehilfsmittels 5a, 5b in einen und aus einem Wirkungsbereich des Roboters 3 und zum An- und Abtransport des Ziel-Ladehilfsmittels 6a..6c in den und aus dem Wirkungsbereich des Roboters 3 auf.

Für den Entnahmevorgang wird der Roboter 3 angewiesen, ein bestimmtes Objekt 2a..2d oder bestimmte Objekte 2a..2d aus dem Quell-Ladehilfsmittel 5a, 5b und damit eine genaue Anzahl von Objekten 2a..2d aus dem Quell-Ladehilfsmittel 5a, 5b zu entnehmen. Das Quell-Ladehilfsmittel 5a, 5b wird vor und nach der Entnahme des zumindest einen Objekts 2a..2d gewogen, und die Anzahl der aus dem Quell-Ladehilfsmittel 5a, 5b entnommenen Objekte 2a..2d wird anhand eines gemessenen Differenzgewichts ermittelt. Gleichermaßen wird das Ziel-Ladehilfsmittel 6a..6c vor und nach dem Ablegen des zumindest einen Objekts 2a..2d gewogen, und die Anzahl der im Ziel-Ladehilfsmittel 6a..6c abgelegten Objekte 2a..2d wird anhand eines gemessenen Differenzgewichts ermittelt. Da bei dem ausgeführten Beispiel im Quell-Ladehilfsmittel 5a, 5b nur eine Type von Objekten 2a..2d enthalten ist, reicht hierfür eine Division des jeweils gemessenen Differenzgewichts durch das (bekannte) Gewicht eines einzelnen Objekts 2a..2d. Denkbar wäre aber natürlich auch, dass die Anzahl und/oder die Type des zumindest einen aus dem Quell-Ladehilfsmittel 5a, 5b entnommenen Objekts 2a..2d und/oder im Ziel-Ladehilfsmittel 6a..6c abgelegten Objekts 2a..2d mit der beschriebenen Vorrichtung dadurch ermittelt wird, dass nach einer Kombination von im Quell-Ladehilfsmittel 5a, 5b enthaltenen Objekten 2a..2d gesucht wird, deren Gesamtgewicht dem Differenzgewicht im Wesentlichen gleicht.

Tritt bei dem Verfahren zum Kommissionieren von Waren beziehungsweise Objekten 2a..2d der Fall e1) ein, dann wird direkt mit Schritt a) fortgesetzt. Tritt der Fall e2) ein, dann werden alle durch den Roboter 3 gehaltenen Objekte 2a..2d im Quell-Ladehilfsmittel 5a, 5b abgelegt, und es wird mit Schritt a) fortgesetzt.

Generell kann die Position, an der ein Objekt 2a..2d aus dem Quell-Ladehilfsmittel 5a, 5b entnommen wird, und die Position, an der ein Objekt 2a..2d im Ziel-Ladehilfsmittel 6a..6c abgelegt wird, und auch die Position, an der ein Objekt 2a..2d von einem Klärplatz 16 aufgenommen wird, bei allen vorgestellten Varianten mit Hilfe eines Sensorsystems (beispielsweise einer Kamera und/oder einem 3D-Sensor/3D-Erkennungssystem) bestimmt werden. Auch der Entnahmevorgang oder Ablegevorgang selbst können mit Hilfe einer Kamera und/oder einem 3D-Sensor/3D-Erkennungssystem überwacht werden. Die Kamera und/oder der 3D-Sensor / das 3D-Erkennungssystem können Teil des ersten Sensorsystems 11 oder des zweiten Sensorsystems sein (vergleiche die Kamera 11 und die Kamera 17 in der Fig. 2). Die Kamera und/oder der 3D-Sensor /das 3D-Erkennungssystem können aber auch ein eigenständiges drittes Sensorsystem bilden. In letzterem Fall sind die Kamera und/oder der 3D-Sensor / das 3D-Erkennungssystem dazu bestimmt, die Entnahmeposition(Greifposition) im Quell-Ladehilfsmittel 5a und/oderAblageposition im Ziel-Ladehilfsmittel 6a festzulegen, nicht jedoch um Anzahl/Type der entnommenen Objekte 2a..2d festzustellen.

Fig. 4 zeigt nun ein Beispiel für eine zwischen einem Quell-Ladehilfsmittel 5a und einem Ziel-Ladehilfsmittel 6a angeordnete und um eine Drehachse 19 schwenkbare Klappe 20. Auf diese Weise kann ein vom Roboter 3 unbeabsichtigt heruntergefallenes Objekt 2c durch Hochschwenken der Klappe 20 gezielt in das Ziel-Ladehilfsmittel 6a befördert werden. Dazu kann die Klappe 20 einen eigenen Schwenkantrieb aufweisen, oder das Hochschwenken der Klappe 20 erfolgt durch den Roboter 3 selbst. Vorteilhaft braucht das (unter Umständen schwierig aufnehmbare/greifbare) Objekt 2c dafür nicht durch den Greifer 4 erfasst werden.

Denkbar ist auch, dass die Klappe 20 alternativ oder zusätzlich zum Quell-Ladehilfsmittel 5a hin neigbar ist. Denkbar ist weiterhin, dass die Klappe 20 alternativ oder zusätzlich zu einer Ablageposition / einem Klärplatz 16 beziehungsweise einem dort abgestellten Behälter neigbar ist. Denkbar ist weiterhin, dass die horizontal ausgerichtete Klappe 20 selbst den Klärplatz 16 bildet.

Denkbar ist darüber hinaus, dass zwischen dem Quell-Ladehilfsmittel 5a und dem Ziel-Ladehilfsmittel 6a eine fixe ebene und horizontale Verbindungfläche angeordnet ist, welche insbesondere den Klärplatz 16 bildet, oder dass eine fixe zum Quell-Ladehilfsmittel 5a hin geneigte, eine fixe zum Ziel-Ladehilfsmittel 6a hin geneigte Verbindungfläche oder eine fixe zu einer Ablageposition / einem Klärplatz 16 hin geneigte Verbindungsfläche vorgesehen ist. Auf diese Weise rutschen vom Roboter 3 unbeabsichtigt heruntergefallene Objekte 2c automatisch an einen der vorgegebenen Plätze. Die Verbindungsfläche kann sich auch rund um das Quell-Ladehilfsmittel 5a und/oder rund um das Ziel-Ladehilfsmittel 6a und/oder rund um einen am Klärplatz 16 angeordneten Behälter erstrecken und diesen oder diese umranden.

Fällt ein Objekt 2c auf die Verbindungsfläche oder Klappe 20, dann könnte eine Abänderung des Vorgangs zum Ablegen des zumindest einen Objekts 2c in das Ziel-Ladehilfsmittel 6a das Aufnehmen des Objekts 2c von der Verbindungsfläche oder das Hochschwenken der Klappe 20 umfassen. Dies trifft auch dann zu, wenn die Verbindungsfläche oder die Klappe 20 selbst den Klärplatz 16 bildet und ein Objekt 2c vom Roboter 3 dort auch willentlich abgelegt werden kann. Eine Abänderung des Vorgangs zum Ablegen des zumindest einen Objekts 2c in das Ziel-Ladehilfsmittel 6a könnte dann auch das (willentliche) Ablegen eines Objekts 2c auf der geneigten Verbindungsfläche (Rutsche) umfassen.

Der Bereich der Verbindungsfläche und/oder Klappe 20 kann mit Hilfe eines Sensorsystems (z.B. einer Kamera und/oder einem 3D-Sensor/3D-Erkennungssystem und/oder einer Waage) überwacht werden. Damit können Position, Lage, Anzahl und Art der vom Roboter 3 heruntergefallenen Objekte 2c bestimmt werden. Die Kamera und/oder der 3D-Sensor / das 3D-Erkennungssystem können Teil des ersten oder zweiten Sensorsystems sein (vergleiche die Kamera 17 in Fig. 2), sie können aber auch ein eigenständiges drittes Sensorsystem bilden.

Die Ausführungsbeispiele zeigen mögliche Ausführungsvarianten erfindungsgemäßer Vorrichtungen la..lc, wobei an dieser Stelle bemerkt sei, dass die Erfindung nicht auf die speziell dargestellten Ausführungsvarianten derselben eingeschränkt ist, sondern auch andere Ausführungsvarianten möglich sind, deren Herleitung im Können des auf diesem technischen Gebiet tätigen Fachmannes liegt.

Insbesondere können die in den Figuren 1 bis 3 vorgestellten Ausführungsvarianten beliebig kombiniert werden. Beispielsweise kann das zweite Sensorsystem einer Kommissioniervorrichtung 1a..1c zumindest ein RFID-Lesegerät 14a, 14b und/oder zumindest eine Kamera 17 und/oder zumindest eine Waage 18 umfassen. Das zweite Sensorsystem kann nur stationär sein, nur auf dem Roboter 3 angeordnet sein oder eine Mischform ausbilden. Ähnliches gilt auch für das erste Sensorsystem 11 einer Kommissioniervorrichtung la..lc, das ebenfalls ein RFID-Lesegerät 14a, 14b und/oder eine Kamera 17 und/oder eine Waage 18 umfassen kann. Das erste Sensorsystem 11 kann nur stationär sein, nur auf dem Roboter 3 angeordnet sein oder eine Mischform ausbilden. Das erste Sensorsystem 11 kann somit insbesondere getrennt vom Roboter 3, jedoch in seinem Wirkungsbereich angeordnet werden. Das erste Sensorsystem 11 kann etwa durch ein Kamerasystem gebildet sein, welches stationär angeordnet ist, um die Anwesenheit zumindest eines Objektes 2a..2d am Roboter 3 bzw. Greifer zu erfassen. Bevorzugt ist das erste Sensorsystem 11 jedoch am Roboter 3, insbesondere an einem beweglichen Roboterarm oder an einem Greifer angeordnet. Das zweite Sensorsystem 14a, 14b, 17, 18 kann sich vom ersten Sensorsystem 11 unterscheiden oder aber auch gleichartig aufgebaut sein.

In den Figuren wurde auf kistenförmige Quell-Ladehilfsmittel 5a, 5b und Ziel-Ladehilfsmittel 6a..6c Bezug genommen. Diese können aber auch anders ausgebildet sein, beispielsweise als Tablare. In diesem Sinn können die Begriffe "Aufnahmevorgang" und "Aufnahmeposition" synonymisch mit "Entnahmevorgang" und "Entnahmeposition" gebraucht werden. Auch die Begriffe "Greifvorgang" und "Greifposition" sind entsprechende Äquivalente. Denkbar wäre auch, dass die kistenförmigen Quell-Ladehilfsmittel 5a, 5b und/oder Ziel-Ladehilfsmittel 6a..6c (z.B. Kartons) nicht direkt auf den Förderrollen 13 transportiert werden, sondern auf Tablaren stehen.

Weiterhin wird festgehalten, dass an einem Kommissioniervorgang auch mehrere Quell-Ladehilfsmittel 5a, 5b und/oder mehrere Ziel-Ladehilfsmittel 6a..6c beteiligt sein können. Beispielsweise kann der Roboter 3 ein Ziel-Ladehilfsmittel 6a..6c mit Objekten 2a..2d aus mehreren Quell-Ladehilfsmitteln 5a, 5b beladen, mehrere Ziel-Ladehilfsmittel 6a..6c mit Objekten 2a..2d aus nur einem Quell-Ladehilfsmittel 5a, 5b beladen oder auch mehrere Ziel-Ladehilfsmittel 6a..6c mit Objekten 2a..2d aus mehreren Quell-Ladehilfsmitteln 5a, 5b beladen.

Generell können die Quell-Ladehilfsmittel 5a, 5b und/oder Ziel-Ladehilfsmittel 6a..6c segmentiert beziehungsweise unterteilt sein können. Beispielsweise können die Quell-Ladehilfsmittel 5a, 5b und/oder Ziel-Ladehilfsmittel 6a..6c Trennwände aufweisen, wodurch mehrere (baulich) voneinander getrennte Abteile entstehen. Für die Belange der Erfindung können diese Abteile auch als mehrere (fix) aneinandergekopplte Einzelbehälter aufgefasst werden. Das heißt, die Vorgangsweise beim Entnehmen von Objekten 2a..2d aus einem Quell-Ladehilfsmittel 5a, 5b mit mehreren Abteilen entspricht der Vorgangsweise beim Entnehmen von Objekten 2a..2d aus mehreren Quell-Ladehilfsmitteln 5a, 5b mit jeweils einem Abteil. In äquivalenter Weise entspricht die Vorgangsweise beim Ablegen von Objekten 2a..2d in einem Ziel-Ladehilfsmittel 6a..6c mit mehreren Abteilen der Vorgangsweise beim Ablegen von Objekten 2a..2d in mehreren Ziel-Ladehilfsmitteln 6a..6c mit jeweils einem Abteil. Insbesondere können die Objekte 2a..2d in den einzelnen Abteilen sortenrein (das heißt, in einem Abteil befinden sich nur Objekte 2a..2d einer Type) oder gemischt (das heißt, in einem Abteil befinden sich Objekte 2a..2d mehrerer Typen) vorliegen.

An dieser Stelle wird auch angemerkt, dass der Kommissioniervorgang insbesondere unter Zuhilfenahme mehrerer Quell-Ladehilfsmittel 5a, 5b und mehrerer Ziel-Ladehilfsmittel 6a..6c erfolgen kann. Dabei können zu einem Zeitpunkt je ein Quell-Ladehilfsmittel 5a, 5b und ein Ziel-Ladehilfsmittel 6a..6c im Wirkungsbereich des Roboters 3 sein, oder es befinden sich zu einem Zeitpunkt mehrere Quell-Ladehilfsmittel 5a, 5b und/oder Ziel-Ladehilfsmittel 6a..6c im Wirkungsbereich des Roboters 3.

Unabhängig von der beanspruchten Erfindung kann auch nur ein zweites Sensorsystem vorgesehen sein und das erste Sensorsystem entfallen, da die Prüfung, ob ein Objekt 2a..2d im Haltebereich A des Roboters 3 anwesend ist oder nicht, grundsätzlich auch vom zweiten Sensorsystem durchgeführt werden kann.

Der Schutzbereich ist jedoch durch die Ansprüche bestimmt. Die Beschreibung und die Zeichnungen sind dabei zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen 1a..1c in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen 1a..1c sowie ihre Bestandteile zum besseren Verständnis ihres Aufbaus darüber hinaus teilweise unmaßstäblich und/oder vergrößert und/oder verkleinert dargestellt wurden.

### Bezugszeichenaufstellung

- 1a..1c: Vorrichtung zum Kommissionieren von Waren
- 2a..2d: Objekt
- 3: Roboter
- 4: Mittel zum Entnehmen/Ablegen zumindest eines Objekts (Greifer)
- 5a, 5b: Quell-Ladehilfsmittel

- 6a..6c: Ziel-Ladehilfsmittel
- 7: Bereitstelleinrichtung/Fördereinrichtung
- 8: Roboterbasis
- 9: erster Roboterarm
- 10: zweiter Roboterarm

- 11: erstes Sensorsystem
- 12: Rahmenprofil
- 13: Förderrolle
- 14a, 14b: RFID-Lesegerät
- 15: Steuerung

- 16: Ablageposition/Klärplatz
- 17: Kamera
- 18: Waage
- 19: Drehachse
- 20: Klappe

- A: Haltebereich

## Patentansprüche

1. Verfahren zum Kommissionieren von Waren beziehungsweise Objekten (2a..2d), umfassend die Schritte
a) Entnehmen zumindest eines Objekts (2a..2d) aus einem Quell-Ladehilfsmittel (5a, 5b) mit Hilfe eines Roboters (3) und
b) Ablegen des zumindest einen Objekts (2a..2d) in ein Ziel-Ladehilfsmittel (6a..6c) mit Hilfe des besagten Roboters (3), wobei
c) nach der Entnahme des Objekts (2a..2d) aus dem Quell-Ladehilfsmittel (5a, 5b) mit Hilfe eines ersten Sensorsystems (11) geprüft wird, ob zumindest ein Objekt (2a..2d) durch den Roboter (3) gehalten wird,
d) mit Hilfe eines zweiten Sensorsystems (14a, 14b, 17, 18) eine Anzahl des zumindest einen entnommenen Objekts (2a..2d) ermittelt wird und
e) der Vorgang zum Ablegen des zumindest einen Objekts (2a..2d) in das Ziel-Ladehilfsmittel (6a..6c) abgebrochen oder abgeändert wird, wenn die Prüfung mit dem ersten Sensorsystem (11) ergibt, dass
el) kein Objekt (2a..2d) durch den Roboter (3) gehalten wird oder
e2) zwar zumindest ein Objekt (2a..2d) durch den Roboter (3) gehalten wird, die mit dem zweiten Sensorsystem (14a, 14b, 17, 18) erfolgte Prüfung jedoch ergibt, dass die Anzahl des zumindest einen aus dem Quell-Ladehilfsmittel (5a, 5b) entnommenen Objekts (2a..2d) größer als die Differenz zwischen einer Soll-Anzahl und einer Ist-Anzahl der im Ziel-Ladehilfsmittel enthaltenen Objekte ist, wobei die Soll-Anzahl von Objekten (2a..2d) im Ziel-Ladehilfsmittel (6a..6c) durch einen Kommissionierauftrag definiert ist.

2. Verfahren nach Anspruch 1, **dadurch gekennzeichnet, dass** im Schritt d) mit Hilfe des zweiten Sensorsystems (14a, 14b, 17, 18) zusätzlich eine Type des zumindest einen entnommenen Objekts (2a..2d) ermittelt wird und der Vorgang zum Ablegen des zumindest einen Objekts (2a..2d) in das Ziel-Ladehilfsmittel (6a..6c) abgebrochen oder abgeändert wird, wenn die mit dem zweiten Sensorsystem (14a, 14b, 17, 18) im Fall e2) erfolgte Prüfung zusätzlich ergibt, dass die Type des zumindest einen aus dem Quell-Ladehilfsmittel (5a, 5b) entnommenen Objekts (2a..2d) nicht zur Vervollständigung des Kommissionierauftrages beiträgt, welcher zusätzlich eine Soll-Type von Objekten (2a..2d) im Ziel-Ladehilfsmittel (6a..6c) definiert.

3. Verfahren nach Anspruch 1 oder 2, **dadurch gekennzeichnet, dass** im Fall e1) direkt mit Schritt a) fortgesetzt wird.

4. Verfahren nach Anspruch 1 oder 2, **dadurch gekennzeichnet, dass** im Fall e2) alle durch den Roboter (3) gehaltenen Objekte (2a..2d) im Quell-Ladehilfsmittel (5a, 5b) abgelegt werden und mit Schritt a) fortgesetzt wird.

5. Verfahren nach Anspruch 1 oder 2, **dadurch gekennzeichnet, dass** im Fall e2) alle durch den Roboter (3) gehaltenen Objekte (2a..2d) an einer vom Quell-Ladehilfsmittel (5a, 5b) und vom Ziel-Ladehilfsmittel (6a..6c) verschiedenen Ablageposition (16) abgelegt werden, ein für das Ziel-Ladehilfsmittel (6a..6c) bestimmtes Objekt (2a..2d) erfasst und im Ziel-Ladehilfsmittel (6a..6c) abgelegt und ein nicht für das Ziel-Ladehilfsmittel (6a..6c) bestimmtes Objekt (2a..2d) erfasst und im Quell-Ladehilfsmittel (5a, 5b) abgelegt wird und in Folge mit Schritt a) fortgesetzt wird.

6. Verfahren nach Anspruch 1 oder 2, **dadurch gekennzeichnet, dass** im Fall e2) alle durch den Roboter (3) gehaltenen Objekte (2a..2d) im Ziel-Ladehilfsmittel (6a..6c) abgelegt werden, ein nicht für das Ziel-Ladehilfsmittel (6a..6c) bestimmtes Objekt (2a..2d) aus dem Ziel-Ladehilfsmittel (6a..6c) entnommen und im Quell-Ladehilfsmittel (5a, 5b) abgelegt wird und in Folge mit Schritt a) fortgesetzt wird.

7. Verfahren nach einem der Ansprüche 1 bis 6, **dadurch gekennzeichnet, dass** die Objekte (2a..2d) mit Radio-Identification-Tags, kurz RFID-Tags, ausgestattet sind und
- das zweite Sensorsystem ein erstes RFID-Lesegerät (14a) für diese RFID-Tags aufweist, dessen Lesebereich das Quell-Ladehilfsmittel (5a, 5b) umfasst, das Ziel-Ladehilfsmittel (6a..6c) und einen Haltebereich (A) des Roboters (3) jedoch ausschließt und dass mit Hilfe einer mit dem ersten RFID-Lesegerät (14a) aus dem RFID-Tag ausgelesenen Information die Anzahl und/oder die Type des zumindest einen aus dem Quell-Ladehilfsmittel (5a, 5b) entnommenen Objekts (2a..2d) ermittelt wird und/oder
- das zweite Sensorsystem ein zweites RFID-Lesegerät (14b) für diese RFID-Tags aufweist, dessen Lesebereich das Ziel-Ladehilfsmittel (6a..6c) umfasst, das Quell-Ladehilfsmittel (5a, 5b) und einen Haltebereich (A) des Roboters (3) jedoch ausschließt und dass mit Hilfe einer mit dem zweiten RFID-Lesegerät (14b) aus dem RFID-Tag ausgelesenen Information die Anzahl und/oder die Type des zumindest einen in das Ziel-Ladehilfsmittel (6a..6c) abgelegten Objekts (2a..2d) ermittelt wird und/oder
- das zweite Sensorsystem ein drittes RFID-Lesegerät für diese RFID-Tags aufweist, dessen Lesebereich einen Haltebereich (A) des Roboters (3) umfasst, das Quell-Ladehilfsmittel (5a, 5b) und das Ziel-Ladehilfsmittel (6a..6c) jedoch ausschließt und dass mit Hilfe einer mit dem dritten RFID-Lesegerät aus dem RFID-Tag ausgelesenen Information die Anzahl und/oder die Type des zumindest einen vom Roboter (3) gehaltenen Objekts (2a..2d) ermittelt wird.

8. Verfahren nach Anspruch 7, **dadurch gekennzeichnet, dass**
- die im Quell-Ladehilfsmittel (5a, 5b) enthaltenen Objekte (2a..2d) mit Hilfe des ersten RFID-Lesegeräts (14a) vor und nach der Entnahme des zumindest einen Objekts (2a..2d) erfasst werden und dass die Anzahl und/oder die Type des zumindest einen aus dem Quell-Ladehilfsmittel (5a, 5b) entnommenen Objekts (2a..2d) anhand einer ermittelten Differenz der bei den beiden Lesevorgängen erfassten Objekte (2a..2d) bestimmt wird und/oder
- die im Ziel-Ladehilfsmittel (6a..6c) enthaltenen Objekte (2a..2d) mit Hilfe des zweiten RFID-Lesegeräts (14b) vor und nach dem Ablegen des zumindest einen Objekts (2a..2d) erfasst werden und dass die Anzahl und/oder die Type des zumindest einen im Ziel-Ladehilfsmittel (6a..6c) abgelegten Objekts (2a..2d) anhand einer ermittelten Differenz der bei den beiden Lesevorgängen erfassten Objekte (2a..2d) bestimmt wird.

9. Verfahren nach Anspruch 7 oder 8, **dadurch gekennzeichnet, dass** ein an einem bewegten Teil (10) des Roboters (3) angeordnetes drittes RFID-Lesegerät für RFID-Tags
- zum Quell-Ladehilfsmittel (5a, 5b) hin bewegt wird, um die im Quell-Ladehilfsmittel (5a, 5b) enthaltenen Objekte (2a..2d) zu erfassen, und/oder
- zum Ziel-Ladehilfsmittel (6a..6c) hin bewegt wird, um die im Ziel-Ladehilfsmittel (6a..6c) enthaltenen Objekte (2a..2d) zu erfassen, und/oder
- vom Quell-Ladehilfsmittel (5a, 5b) und vom Ziel-Ladehilfsmittel (6a..6c) weg bewegt wird, um die vom Roboter (3) im Haltebereich (A) gehaltenen Objekte (2a..2d) zu erfassen.

10. Verfahren nach einem der Ansprüche 7 bis 9, **dadurch gekennzeichnet, dass** auf einem RFID-Tag die Type jenes Objekts (2a..2d) gespeichert ist, auf oder in dem der RFID-Tag angeordnet ist, oder dass auf dem besagten RFID-Tag ein Verweis in eine Datenbank gespeichert ist, in der die besagte Type gespeichert ist.

11. Verfahren nach einem der Ansprüche 1 bis 10, **dadurch gekennzeichnet, dass** das zweite Sensorsystem eine Kamera (17) und/oder einen 3D-Sensor beziehungsweise ein 3D-Erkennungssystem aufweist und
- die Anzahl und/oder die Type des zumindest einen aus dem Quell-Ladehilfsmittel (5a, 5b) entnommenen Objekts (2a..2d) durch einen Vergleich eines vor und eines nach dem Entnahmevorgang erfassten Abbildes eines Inhalts des Quell-Ladehilfsmittels (5a, 5b) ermittelt wird und/oder
- die Anzahl und/oder die Type des zumindest einen im Ziel-Ladehilfsmittel (6a..6c) abgelegten Objekts (2a..2d) durch einen Vergleich eines vor und eines nach dem Ablegevorgang erfassten Abbildes eines Inhalts des Ziel-Ladehilfsmittels (6a..6c) ermittelt wird und/oder
- die Anzahl und/oder die Type des zumindest einen vom Roboter (3) gehaltenen Objekts (2a..2d) anhand eines vom Haltebereich (A) des Roboters (3) erfassten Abbilds ermittelt wird.

12. Verfahren nach einem der Ansprüche 1 bis 11, **dadurch gekennzeichnet, dass**
- das Quell-Ladehilfsmittel (5a, 5b) vor und nach der Entnahme des zumindest einen Objekts (2a..2d) mit Hilfe einer Waage (18), welche vom zweiten Sensorsystem umfasst ist, gewogen wird und dass die Anzahl und/oder die Type des zumindest einen aus dem Quell-Ladehilfsmittel (5a, 5b) entnommenen Objekts (2a..2d) anhand eines gemessenen Differenzgewichts ermittelt wird und/oder
- das Ziel-Ladehilfsmittel (6a..6c) vor und nach dem Ablegen des zumindest einen Objekts (2a..2d) mit Hilfe einer Waage (18), welche vom zweiten Sensorsystem umfasst ist, gewogen wird und dass die Anzahl und/oder die Type des zumindest einen im Ziel-Ladehilfsmittel (6a..6c) abgelegten Objekts (2a..2d) anhand eines gemessenen Differenzgewichts ermittelt wird und/oder
- ein vor und nach der Entnahme des zumindest einen Objekts (2a..2d) vom Roboter (3) gehaltenes Gewicht mit Hilfe einer Waage, welche vom zweiten Sensorsystem umfasst ist, gemessen wird und dass die Anzahl und/oder die Type des zumindest einen vom Roboter (3) gehaltenen Objekts (2a..2d) anhand eines gemessenen Differenzgewichts ermittelt wird.

13. Verfahren nach Anspruch 12, **dadurch gekennzeichnet, dass**
- ein Gewicht eines im Quell-Ladehilfsmittel (5a, 5b) enthaltenen Objekts (2a..2d) einer Type bekannt ist und
- die Anzahl und/oder die Type des zumindest einen aus dem Quell-Ladehilfsmittel (5a, 5b) entnommenen Objekts (2a..2d) und/oder im Ziel-Ladehilfsmittel (6a..6c) abgelegten Objekts (2a..2d) und/oder vom Roboter (3) gehaltenen Objekts (2a..2d) dadurch ermittelt wird, dass nach einer Kombination von im Quell-Ladehilfsmittel (5a, 5b) enthaltenen Objekten (2a..2d) gesucht wird, deren Gesamtgewicht dem Differenzgewicht im Wesentlichen gleicht.

14. Verfahren nach Anspruch 13, **dadurch gekennzeichnet, dass** das Differenzgewicht durch das Gesamtgewicht jeder Kombination von im Quell-Ladehilfsmittel (5a, 5b) enthaltenen Objekten (2a..2d) bis zu einer Gesamtzahl von fünf Objekten (2a..2d) oder bis zu einer Gesamtzahl von Objekten (2a..2d), welche in einem Entnahmevorgang durch den Roboter (3) aus dem Quell-Ladehilfsmittel (5a, 5b) entnommen werden können, dividiert wird und die gesuchte Kombination jene ist, welcher der am nächsten bei Eins liegende Wert zugeordnet ist.

15. Verfahren nach Anspruch 14, **dadurch gekennzeichnet, dass** wie nach einem der Ansprüche 3 bis 5 im Fall e2) verfahren wird, wenn der am nächsten bei Eins liegende Wert eine über einem ersten Schwellwert liegende Abweichung von Eins oder eine unter einem zweiten Schwellwert liegende Abweichung vom zweitnächsten Wert aufweist.

16. Verfahren nach einem der Ansprüche 13 bis 15, **dadurch gekennzeichnet, dass** sich das Gesamtgewicht jeder Kombination von Objekten (2a..2d) bis zu einer Gesamtzahl von fünf Objekten (2a..2d) oder bis zu einer Gesamtzahl von Objekten (2a..2d), welche in einem Entnahmevorgang durch den Roboter (3) aus dem Quell-Ladehilfsmittel (5a, 5b) entnommen werden können, voneinander unterscheidet.

17. Verfahren nach einem der Ansprüche 4 bis 16, **dadurch gekennzeichnet, dass** wie nach einem der Ansprüche 4 bis 6 im Fall e2) verfahren wird und/oder ein Alarm ausgegeben wird, wenn
- ein Vergleich der ermittelten Anzahl und/oder der ermittelten Type des zumindest einen aus dem Quell-Ladehilfsmittel (5a, 5b) entnommenen Objekts (2a..2d) eine Abweichung zu der ermittelten Anzahl und/oder der ermittelten Type des zumindest einen vom Roboter (3) gehaltenen Objekts (2a..2d) ergibt und/oder
- ein Vergleich der ermittelten Anzahl und/oder der ermittelten Type des zumindest einen aus dem Quell-Ladehilfsmittel (5a, 5b) entnommenen Objekts (2a..2d) eine Abweichung zu der ermittelten Anzahl und/oder der ermittelten Type des zumindest einen im Ziel-Ladehilfsmittel (6a..6c) abgelegten Objekts (2a..2d) ergibt und/oder
- ein Vergleich der ermittelten Anzahl und/oder der ermittelten Type des zumindest einen vom Roboter (3) gehaltenen Objekts (2a..2d) eine Abweichung zu der ermittelten Anzahl und/oder der ermittelten Type des zumindest einen im Ziel-Ladehilfsmittel (6a..6c) abgelegten Objekts (2a..2d) ergibt.

18. Verfahren nach einem der Ansprüche 1 bis 17, **dadurch gekennzeichnet, dass** der Roboter (3) für den Entnahmevorgang angewiesen wird, eine genaue Anzahl von Objekten (2a..2d) aus dem Quell-Ladehilfsmittel (5a, 5b) zu entnehmen.

19. Verfahren nach einem der Ansprüche 1 bis 17, **dadurch gekennzeichnet, dass** der Roboter (3) für den Entnahmevorgang angewiesen wird, eine beliebige Anzahl von Objekt (2a..2d) aus dem Quell-Ladehilfsmittel (5a, 5b) zu entnehmen.

20. Verfahren nach einem der Ansprüche 1 bis 19, **dadurch gekennzeichnet, dass** der Roboter (3) für den Entnahmevorgang angewiesen wird, ein bestimmtes Objekt (2a..2d) oder bestimmte Objekte (2a..2d) aus dem Quell-Ladehilfsmittel (5a, 5b) zu entnehmen.

21. Verfahren nach einem der Ansprüche 1 bis 19, **dadurch gekennzeichnet, dass** der Roboter (3) für den Entnahmevorgang angewiesen wird, irgendein Objekt (2a..2d) oder irgendwelche Objekte (2a..2d) aus dem Quell-Ladehilfsmittel (5a, 5b) zu entnehmen.

22. Verfahren nach einem der Ansprüche 1 bis 21, **dadurch gekennzeichnet, dass** der Roboter (3) für den Entnahmevorgang angewiesen wird, das zumindest eine Objekt (2a..2d) an einer genauen Position aus dem Quell-Ladehilfsmittel (5a, 5b) zu entnehmen und/oder an einer genauen Position im Ziel-Ladehilfsmittel (6a..6c) abzulegen.

23. Verfahren nach einem der Ansprüche 1 bis 21, **dadurch gekennzeichnet, dass** der Roboter (3) für den Entnahmevorgang angewiesen wird, das zumindest eine Objekt (2a..2d) an einer beliebigen Position aus dem Quell-Ladehilfsmittel (5a, 5b) zu entnehmen und/oder an einer beliebigen Position im Ziel-Ladehilfsmittel (6a..6c) abzulegen.

24. Verfahren nach einem der Ansprüche 1 bis 23, **dadurch gekennzeichnet, dass** im Quell-Ladehilfsmittel (5a, 5b) nur eine Type von Objekten (2a..2d) enthalten ist.

25. Verfahren nach einem der Ansprüche 1 bis 24, **dadurch gekennzeichnet, dass** das erste Sensorsystem (11) nur einen Belegungszustand des Haltebereichs (A) des Roboters (3) durch zumindest ein Objekt (2a..2d) ermittelt.

26. Verfahren nach einem der Ansprüche 1 bis 25, **dadurch gekennzeichnet, dass** die Prüfung mit dem ersten Sensorsystem (11) nur einmal pro Durchlauf der Schritte a) bis e) erfolgt.

27. Verfahren nach einem der Ansprüche 1 bis 25, **dadurch gekennzeichnet, dass** die Prüfung mit dem ersten Sensorsystem (11) mehrmals je Durchlauf der Schritte a) bis e) erfolgt.

28. Vorrichtung (1a..1c) zum Kommissionieren von Waren beziehungsweise Objekten (2a..2d), umfassend
- einen Roboter (3) mit Mitteln (4) zur Entnahme zumindest eines Objekts (2a..2d) aus einem Quell-Ladehilfsmittel (5a, 5b) und zum Ablegen des zumindest einen Objekts (2a..2d) in einem Ziel-Ladehilfsmittel (6a..6c),
- eine Bereitstelleinrichtung (7) zum Bereitstellen des Quell-Ladehilfsmittels (5a, 5b) und des Ziel-Ladehilfsmittels (6a..6c) in einem Wirkungsbereich des Roboters (3),
- ein erstes Sensorsystem (11) zur Überprüfung, ob zumindest ein Objekt (2a..2d) durch den Roboter (3) gehalten wird,
- ein zweites Sensorsystem (14a, 14b, 17, 18) zur Ermittlung einer Anzahl des zumindest einen entnommenen Objekts (2a..2d) und
- eine Steuerung (15), welche dazu ausgebildet ist, einen Vorgang zum Ablegen des zumindest einen Objekts (2a..2d) in das Ziel-Ladehilfsmittel (6a..6c) abzubrechen oder abzuändern, wenn die Prüfung mit dem ersten Sensorsystem (11) ergibt, dass kein Objekt (2a..2d) durch den Roboter (3) gehalten wird, oder dass zwar zumindest ein Objekt (2a..2d) durch den Roboter (3) gehalten wird, die mit dem zweiten Sensorsystem (14a, 14b, 17, 18) erfolgte Prüfung jedoch ergibt, dass die Anzahl des zumindest einen aus dem Quell-Ladehilfsmittel (5a, 5b) entnommenen Objekts (2a..2d) größer als die Differenz zwischen einer Soll-Anzahl und einer Ist-Anzahl der im Ziel-Ladehilfsmittel enthaltenen Objekte ist, wobei die Soll-Anzahl von Objekten (2a..2d) im Ziel-Ladehilfsmittel (6a..6c) durch einen Kommissionierauftrag definiert ist.

29. Vorrichtung (1a..1c) nach Anspruch 28, **dadurch gekennzeichnet, dass** das zweite Sensorsystem (14a, 14b, 17, 18) zusätzlich zur Ermittlung einer Type des zumindest einen entnommenen Objekts (2a..2d) ausgebildet ist und die Steuerung (15) zusätzlich dazu ausgebildet ist, den Vorgang zum Ablegen des zumindest einen Objekts (2a..2d) in das Ziel-Ladehilfsmittel (6a..6c) abzubrechen oder abzuändern, wenn die mit dem zweiten Sensorsystem (14a, 14b, 17, 18) erfolgte Prüfung zusätzlich ergibt, dass die Type des zumindest einen aus dem Quell-Ladehilfsmittel (5a, 5b) entnommenen Objekts (2a..2d) nicht zur Vervollständigung des Kommissionierauftrages beiträgt, welcher zusätzlich eine Soll-Type von Objekten (2a..2d) im Ziel-Ladehilfsmittel (6a..6c) definiert.

30. Vorrichtung (1a..1c) nach Anspruch 28 oder 29, **dadurch gekennzeichnet, dass** die Mittel zur Entnahme und zum Ablegen des zumindest einen Objekts (2a..2d) durch einen zangenartigen oder handartigen Greifer (4) oder durch einen Vakuum-Sauggreifer oder durch eine beliebige Kombination dieser Greifer gebildet sind.

31. Vorrichtung (1a..1c) nach einem der Ansprüche 28 bis 30, **dadurch gekennzeichnet, dass** das erste Sensorsystem (11) und/oder das zweite Sensorsystem (14a, 14b, 17, 18) am Roboter (3) angeordnet ist.

32. Vorrichtung (1a..1c) nach einem der Ansprüche 28 bis 31, **dadurch gekennzeichnet, dass** das zweite Sensorsystem (14a, 14b, 17, 18) stationär ist und das Quell-Ladehilfsmittel (5a, 5b) und/oder Ziel-Ladehilfsmittel (6a..6c) erfasst.

33. Vorrichtung (1a..1c) nach einem der Ansprüche 28 bis 32, **dadurch gekennzeichnet, dass** das erste Sensorsystem (11) einen Ultraschallsensor und/oder, sofern der Roboter (3) mit einem Vakuum-Sauggreifer ausgestattet ist, einen Vakuum-Sensor umfasst, und/oder ein RFID-Lesegerät und/oder eine Kamera und/oder eine Waage / einen Kraftsensor.

34. Vorrichtung (1a..1c) nach einem der Ansprüche 28 bis 33, **dadurch gekennzeichnet, dass** das zweite Sensorsystem
- ein RFID-Lesegerät (14a, 14b) für Radio-Identification-Tags, kurz RFID-Tags, aufweist, dessen Lesebereich das Quell-Ladehilfsmittel (5a, 5b), das Ziel-Ladehilfsmittel (6a..6c) und/oder eines Haltebereichs (A) des Roboters (3) umfasst,
- eine Kamera (A) und/oder einen 3D-Sensor / ein 3D-Erkennungssystem aufweist, welcher zur Erfassung eines Abbildes eines Inhalts des Quell-Ladehilfsmittels (5a, 5b), des Ziel-Ladehilfsmittels (6a..6c) und/oder eines Haltebereichs (A) des Roboters (3) ausgebildet ist oder
- zumindest eine Waage (18) zum Wiegen des Quell-Ladehilfsmittels (5a, 5b), des Ziel-Ladehilfsmittels (6a..6c) und/oder eines Haltebereichs (A) des Roboters (3) aufweist.

35. Vorrichtung (1a..1c) nach einem der Ansprüche 28 bis 34, **dadurch gekennzeichnet, dass** die Bereitstelleinrichtung eine Fördereinrichtung (7) zur Zufuhr des Quell-Ladehilfsmittels (5a, 5b) in einen Wirkungsbereich des Roboters (3) und zum Abtransport des Ziel-Ladehilfsmittels (6a..6c) aus dem Wirkungsbereich des Roboters (3) aufweist.

36. Vorrichtung (1a..1c) nach einem der Ansprüche 28 bis 35, **gekennzeichnet durch** eine zwischen dem Quell-Ladehilfsmittel (5a, 5b) und dem Ziel-Ladehilfsmittel (6a..6c) angeordnete
- fixe ebene und horizontale Verbindungfläche oder
- fixe zum Quell-Ladehilfsmittel (5a, 5b) oder dem Ziel-Ladehilfsmittel (6a..6c) hin geneigte Verbindungfläche oder
- fixe zur Ablageposition (16) hin geneigte Verbindungfläche oder
- bewegliche, zum Quell-Ladehilfsmittel (5a, 5b) oder zum Ziel-Ladehilfsmittel (6a..6c) oder zur Ablageposition (16) hin neigbare Verbindungfläche/Klappe (20) aufweist.

37. Vorrichtung (1a..1c) nach Anspruch 36, **gekennzeichnet durch** eine die Verbindungsfläche oder Klappe (20) erfassende Sensorik.

38. Computerprogrammprodukt mit einem darauf gespeicherten Computerprogramm, das in/auf einen Rechner (15) einer Vorrichtung (1a..1c) nach einem der Patentansprüche 28 bis 37 ladbar ist und dort ein Verfahren nach einem der Ansprüche 1 bis 27 ausführt, wenn das Computerprogramm dort ausgeführt wird.

## Claims

1. A method for picking articles / objects (2a..2d), comprising the steps
a) removing at least one object (2a..2d) from a source loading aid (5a, 5b) with the help of a robot (3) and
b) placing the at least one object (2a..2d) in a target loading aid (6a..6c) with the help of said robot (3), wherein
c) after removing the object (2a..2d) from the source loading aid (5a, 5b) it is checked with the help of a first sensor system (11) whether at least one object (2a..2d) is held by the robot (3),
d) a number of the at least one removed object (2a..2d) is ascertained with the help of a second sensor system (14a, 14b, 17, 18) and
e) the process for placing the at least one object (2a..2d) into the target loading aid (6a..6c) is aborted or modified if the check using the first sensor system (11) reveals that
e1) no object (2a..2d) is held by the robot (3) or
e2) while at least one object (2a..2d) is held by the robot (3), the check carried out using the second sensor system (14a, 14b, 17, 18), however, reveals that the number of the at least one object (2a..2d) removed from the source loading aid (5a, 5b) is greater than the difference between a desired number and an actual number of the objects contained in the target loading aid, wherein the desired number of objects (2a..2d) in the target loading aid (6a..6c) is defined by a picking order.

2. The method according to claim 1, **characterized in that** in step d), a type of the at least one removed object (2a..2d) is additionally ascertained with the help of the second sensor system (14a, 14b, 17, 18) and the process for placing the at least one object (2a..2d) into the target loading aid (6a..6c) is aborted or modified if the check carried out in case e2) using the second sensor system (14a, 14b, 17, 18) additionally reveals that the type of the at least one object (2a..2d) removed from the source loading aid (5a, 5b) does not contribute to completing the picking order, which additionally defines a desired type of objects (2a..2d) in the target loading aid (6a..6c).

3. The method according to claim 1 or 2, **characterized in that** in the case e1) it is directly continued with step a).

4. The method according to claim 1 or 2, **characterized in that** in the case e2), all objects (2a..2d) held by the robot (3) are placed in the source loading aid (5a, 5b) and it is continued with step a).

5. The method according to claim 1 or 2, **characterized in that** in the case e2), all objects (2a..2d) held by the robot (3) are placed at a placing position (16) different from the source loading aid (5a, 5b) and from the target loading aid (6a..6c), an object (2a..2d) intended for the target loading aid (6a..6c) is seized and placed in the target loading aid (6a..6c), and an object (2a..2d) not intended for the target loading aid (6a..6c) is seized and placed in the source loading aid (5a, 5b), and subsequently it is continued with step a).

6. The method according to claim 1 or 2, **characterized in that** in the case e2), all objects (2a..2d) held by the robot (3) are placed in the target loading aid (6a..6c), an object (2a..2d) not intended for the target loading aid (6a..6c) is removed from the target loading aid (6a..6c) and placed in the source loading aid (5a, 5b), and subsequently it is continued with step a).

7. The method according to any one of the claims 1 to 6, **characterized in that** the objects (2a..2d) are equipped with radio identification tags, RFID tags in short, and
- the second sensor system has a first RFID reading device (14a) for these RFID tags, whose reading range comprises the source loading aid (5a, 5b) but excludes the target loading aid (6a..6c) and a holding range (A) of the robot (3), and that the number and/or the type of the at least one object (2a..2d) removed from the source loading aid (5a, 5b) is ascertained with the help of a piece of information read out from the RFID tag using the first RFID reading device (14a) and/or
- the second sensor system has a second RFID reading device (14b) for these RFID tags, whose reading range comprises the target loading aid (6a..6c) but excludes the source loading aid (5a, 5b) and a holding range (A) of the robot (3), and that the number and/or the type of the at least one object (2a..2d) placed into the target loading aid (6a..6c) is ascertained with the help of a piece of information read out from the RFID tag using the second RFID reading device (14b) and/or
- the second sensor system has a third RFID reading device for these RFID tags, whose reading range comprises a holding range (A) of the robot (3) but excludes the source loading aid (5a, 5b) and the target loading aid (6a..6c), and that the number and/or the type of the at least one object (2a..2d) held by the robot (3) is ascertained with the help of a piece of information read out from the RFID tag using the third RFID reading device.

8. The method according to claim 7, **characterized in that**
- the objects (2a..2d) contained in the source loading aid (5a, 5b) are acquired with the help of the first RFID reading device (14a) before and after the operation of removing the at least one object (2a..2d) and that the number and/or the type of the at least one object (2a..2d) removed from the source loading aid (5a, 5b) is determined by means of an ascertained difference of the objects (2a..2d) acquired during the two reading processes and/or
- the objects (2a..2d) contained in the target loading aid (6a..6c) are acquired with the help of the second RFID reading device (14b) before and after the operation of placing the at least one object (2a..2d) and that the number and/or the type of the at least one object (2a..2d) placed in the target loading aid (6a..6c) is determined by means of an ascertained difference of the objects (2a..2d) acquired during the two reading processes.

9. The method according to claim 7 or 8, **characterized in that** a third RFID reading device for RFID tags disposed at a moving part (10) of the robot (3)
- is moved toward the source loading aid (5a, 5b) in order to acquire the objects (2a..2d) contained in the source loading aid (5a, 5b) and/or
- is moved toward the target loading aid (6a..6c) in order to acquire the objects (2a..2d) contained in the target loading aid (6a..6c), and/or
- is moved away from the source loading aid (5a, 5b) and from the target loading aid (6a..6c) in order to acquire the objects (2a..2d) held by the robot (3) in the holding range (A).

10. The method according to any one of the claims 7 to 9, **characterized in that** an RFID tag stores the type of that object (2a..2d) at or in which the RFID tag is disposed, or that said RFID tag stores a reference into a database in which said type is stored.

11. The method according to any one of the claims 1 to 10, **characterized in that** the second sensor system has a camera (17) and/or a 3D sensor and/or a 3D detection system and
- the number and/or the type of the at least one object (2a..2d) removed from the source loading aid (5a, 5b) is ascertained by a comparison of an image of a content of the source loading aid (5a, 5b) acquired before and of an image of a content of the source loading aid (5a, 5b) acquired after the removal process and/or
- the number and/or the type of the at least one object (2a..2d) placed in the target loading aid (6a..6c) is ascertained by a comparison of an image of a content of the target loading aid (6a..6c) acquired before and of an image of a content of the target loading aid (6a..6c) acquired after the placing process and/or
- the number and/or the type of the at least one object (2a..2d) held by the robot (3) is ascertained by means of an image acquired of the holding range (A) of the robot (3).

12. The method according to any one of the claims 1 to 11, **characterized in that**
- the source loading aid (5a, 5b) is weighed with the help of a weighing scale (18) before and after the operation of removing the at least one object (2a..2d), which weighing scale (18) is comprised by the second sensor system, and that the number and/or the type of the at least one object (2a..2d) removed from the source loading aid (5a, 5b) is ascertained by means of a measured weight difference and/or
- the target loading aid (6a..6c) is weighed with the help of a weighing scale (18) before and after the operation of placing the at least one object (2a..2d), which weighing scale (18) is comprised by the second sensor system, and that the number and/or the type of the at least one object (2a..2d) placed in the target loading aid (6a..6c) is ascertained by means of a measured weight difference and/or
- a weight held by the robot (3) before and after the operation of removing the at least one object (2a..2d) is measured with the help of a weighing scale, which is comprised by the second sensor system, and that the number and/or the type of the at least one object (2a..2d) held by the robot (3) is ascertained by means of a measured weight difference.

13. The method according to claim 12, **characterized in that**
- a weight of an object (2a..2d) of a type contained in the source loading aid (5a, 5b) is known and
- the number and/or the type of the at least one object (2a..2d) removed from the source loading aid (5a, 5b) and/or object (2a..2d) placed in the target loading aid (6a..6c) and/or object (2a..2d) held by the robot (3) is ascertained by seeking a combination of objects (2a..2d) contained in the source loading aid (5a, 5b) whose total weight is essentially equal to the weight difference.

14. The method according to claim 13, **characterized in that** the weight difference is divided by the total weight of every combination of objects (2a..2d) contained in the source loading aid (5a, 5b) up to a total number of five objects (2a..2d) or up to a total number of objects (2a..2d), which can be removed by the robot (3) from the source loading aid (5a, 5b) during a removal process, and the sought combination is the one allocated the value closest to one.

15. The method according to claim 14, **characterized in that** it is proceeded in the same way as according to any one of the claims 3 to 5 in the case e2) if the value closest to one has a deviation from one which is above a first threshold or a deviation from the second-closest value which is below a second threshold.

16. The method according to any one of the claims 13 to 15, **characterized in that** the total weight of every combination of objects (2a..2d) up to a total number of five objects (2a..2d) or up to a total number of objects (2a..2d), which can be removed by the robot (3) from the source loading aid (5a, 5b) during a removal process, is different.

17. The method according to any one of the claims 4 to 16, **characterized in that** it is proceeded in the same way as according to any one of the claims 4 to 6 in the case e2) and/or an alarm is emitted if
- a comparison of the ascertained number and/or the ascertained type of the at least one object (2a..2d) removed from the source loading aid (5a, 5b) reveals a deviation to the ascertained number and/or the ascertained type of the at least one object (2a...2d) held by the robot (3) and/or
- a comparison of the ascertained number and/or the ascertained type of the at least one object (2a..2d) removed from the source loading aid (5a, 5b) reveals a deviation to the ascertained number and/or the ascertained type of the at least one object (2a..2d) placed in the target loading aid (6a..6c) and/or
- a comparison of the ascertained number and/or the ascertained type of the at least one object (2a..2d) held by the robot (3) reveals a deviation to the ascertained number and/or the ascertained type of the at least one object (2a..2d) placed in the target loading aid (6a..6c).

18. The method according to any one of the claims 1 to 17, **characterized in that** the robot (3) is instructed with respect to the removal process to remove an exact number of objects (2a..2d) from the source loading aid (5a, 5b).

19. The method according to any one of the claims 1 to 17, **characterized in that** the robot (3) is instructed with respect to the removal process to remove any number of object (2a..2d) from the source loading aid (5a, 5b).

20. The method according to any one of the claims 1 to 19, **characterized in that** the robot (3) is instructed with respect to the removal process to remove a specific object (2a..2d) or specific objects (2a..2d) from the source loading aid (5a, 5b).

21. The method according to any one of the claims 1 to 19, **characterized in that** the robot (3) is instructed with respect to the removal process to remove any object (2a..2d) or any objects (2a..2d) from the source loading aid (5a, 5b).

22. The method according to any one of the claims 1 to 21, **characterized in that** the robot (3) is instructed with respect to the removal process to remove the at least one object (2a..2d) at an exact position from the source loading aid (5a, 5b) and/or place it at an exact position in the target loading aid (6a..6c).

23. The method according to any one of the claims 1 to 21, **characterized in that** the robot (3) is instructed with respect to the removal process to remove the at least one object (2a..2d) at any position from the source loading aid (5a, 5b) and/or place it at any position in the target loading aid (6a..6c).

24. The method according to any one of the claims 1 to 23, **characterized in that** the source loading aid (5a, 5b) contains only one type of objects (2a..2d).

25. The method according to any one of the claims 1 to 24, **characterized in that** the first sensor system (11) ascertains only a state of occupancy of the holding range (A) of the robot (3) by at least one object (2a..2d).

26. The method according to any one of the claims 1 to 25, **characterized in that** the check using the first sensor system (11) is carried out only once per run through the steps a) to e).

27. The method according to any one of the claims 1 to 25, **characterized in that** the check using the first sensor system (11) is carried out multiple times per run through the steps a) to e).

28. A device (1a..1c) for picking articles / objects (2a..2d), comprising
- a robot (3) having means (4) for removing at least one object (2a..2d) from a source loading aid (5a, 5b) and for placing the at least one object (2a..2d) in a target loading aid (6a..6c),
- a provisioning device (7) for provisioning the source loading aid (5a, 5b) and the target loading aid (6a..6c) within a range of action of the robot (3),
- a first sensor system (11) for checking whether at least one object (2a..2d) is held by the robot (3),
- a second sensor system (14a, 14b, 17, 18) for ascertaining a number of the at least one removed object (2a..2d), and
- a control (15) configured to abort or modify a process for placing the at least one object (2a..2d) into the target loading aid (6a..6c) if the check using the first sensor system (11) reveals that no object (2a..2d) is held by the robot (3) or that, while at least one object (2a..2d) is held by the robot (3), the check carried out using the second sensor system (14a, 14b, 17, 18), however, reveals that the number of the at least one object (2a..2d) removed from the source loading aid (5a, 5b) is greater than the difference between a desired number and an actual number of the objects contained in the target loading aid, wherein the desired number of objects (2a..2d) in the target loading aid (6a..6c) is defined by a picking order.

29. The device (1a..1c) according to claim 28, **characterized in that** the second sensor system (14a, 14b, 17, 18) is additionally configured to ascertain a type of the at least one removed object (2a..2d) and the control (15) is additionally configured to abort or modify the process for placing the at least one object (2a..2d) into the target loading aid (6a..6c) if the check carried out using the second sensor system (14a, 14b, 17, 18) additionally reveals that the type of the at least one object (2a..2d) removed from the source loading aid (5a, 5b) does not contribute to completing the picking order, which additionally defines a desired type of objects (2a..2d) in the target loading aid (6a..6c).

30. The device (1a..1c) according to claim 28 or 29, **characterized in that** the means for the operation of removing and for the operation of placing the at least one object (2a..2d) are formed by a pliers-like or hand-like gripper (4) or by a vacuum gripper or by any combination of these grippers.

31. The device (1a..1c) according to any one of the claims 28 to 30, **characterized in that** the first sensor system (11) and/or the second sensor system (14a, 14b, 17, 18) is disposed at the robot (3).

32. The device (1a..1c) according to any one of the claims 28 to 31, **characterized in that** the second sensor system (14a, 14b, 17, 18) is stationary and acquires the source loading aid (5a, 5b) and/or target loading aid (6a..6c).

33. The device (1a..1c) according to any one of the claims 28 to 32, **characterized in that** the first sensor system (11) comprises an ultrasonic sensor and/or, provided that the robot (3) is equipped with a vacuum suction gripper, a vacuum sensor and/or an RFID reading device and/or a camera and/or a weighing scale / a force sensor.

34. The device (1a..1c) according to any one of the claims 28 to 33, **characterized in that** the second sensor system
- has an RFID reading device (14a, 14b) for radio identification tags, RFID tags in short, whose reading range comprises the source loading aid (5a, 5b), the target loading aid (6a..6c) and/or of a holding range (A) of the robot (3),
- has a camera (A) and/or a 3D-Sensor / a 3D detection system configured for acquisition of an image of a content of the source loading aid (5a, 5b), of the target loading aid (6a..6c) and/or of a holding range (A) of the robot (3) or
- has at least a weighing scale (18) for weighing the source loading aid (5a, 5b), the target loading aid (6a..6c) and/or a holding range (A) of the robot (3).

35. The device (1a..1c) according to any one of the claims 28 to 34, **characterized in that** the provisioning device has a conveying device (7) for supplying the source loading aid (5a, 5b) into a range of action of the robot (3) and for transporting the target loading aid (6a..6c) out of the range of action of the robot (3).

36. The device (1a..1c) according to any one of the claims 28 to 35, **characterized by**
- a fixed, level and horizontal connecting surface or
- a fixed connecting surface inclined toward the source loading aid (5a, 5b) or the target loading aid (6a..6c) or
- a fixed connecting surface inclined toward the placing position (16) or
- has a movable connecting surface/flap (20) inclinable toward the source loading aid (5a, 5b) or toward the target loading aid (6a..6c) or toward the placing position (16), respectively disposed between the source loading aid (5a, 5b) and the target loading aid (6a..6c).

37. The device (1a..1c) according to claim 36, **characterized by** a sensor system acquiring the connecting surface or flap (20).

38. A computer program product having a computer program stored on it, which is loadable in/onto a computer (15) of a device (1a..1c) according to any one of the patent claims 28 to 37 and executes there a method according to any one of the claims 1 to 27 if the computer program is executed there.

## Revendications

1. Procédé de préparation de commandes de marchandises, respectivement d'objets (2a...2d), comprenant les étapes suivantes :
a) retrait d'au moins un objet (2a...2d) d'un équipement de chargement source (5a, 5b) à l'aide d'un robot (3) et
b) dépose de l'au moins un objet (2a... 2d) dans un équipement de chargement cible (6a...6c) à l'aide dudit robot (3), dans lequel
c) après le retrait de l'objet (2a...2d) de l'équipement de chargement source (5a, 5b), il est vérifié, à l'aide d'un premier système de capteur (11), si au moins un objet (2a...2d) est tenu par le robot (3),
d) à l'aide d'un deuxième système de capteur (14a, 14b, 17, 18), un nombre de l'au moins un objet (2a...2d) retiré est déterminé et
e) le processus de dépose de l'au moins un objet (2a...2d) dans l'équipement de chargement cible (6a...6c) est interrompu ou modifié si la vérification avec le premier système de capteur (11) indique que
e1) aucun objet (2a...2d) n'est tenu par le robot (3) ou
e2) au moins un objet (2a...2d) est tenu par le robot (3), mais la vérification effectuée avec le deuxième système de capteur (14a, 14b, 17, 18) indique que le nombre de l'au moins un objet (2a...2d) retiré de l'équipement de chargement source (5a, 5b) est supérieur à la différence entre un nombre de consigne et un nombre réel d'objets contenus dans l'équipement de chargement cible, dans lequel le nombre de consigne d'objets (2a...2d) dans l'équipement de chargement cible (6a...6c) est défini par une tâche de préparation de commande.

2. Procédé selon la revendication 1, **caractérisé en ce que**, à l'étape d), à l'aide du deuxième système de capteur (14a, 14b, 17, 18) un type de l'au moins un objet (2a...2d) retiré est en outre déterminé et le processus de dépose de l'au moins un objet (2a...2d) dans l'équipement de chargement cible (6a...6c) est interrompu ou modifié si la vérification effectuée avec le deuxième système de capteur (14a, 14b, 17, 18), dans le cas e2), indique en outre que le type de l'au moins un objet (2a...2d) retiré de l'équipement de chargement source (5a, 5b) ne contribue pas à la réalisation de la tâche de préparation de commande, qui définit un type de consigne d'objets (2a...2d) dans l'équipement de chargement cible (6a...6c).

3. Procédé selon la revendication 1 ou 2, **caractérisé en ce que**, dans le cas e1), on continue directement avec l'étape a).

4. Procédé selon la revendication 1 ou 2, **caractérisé en ce que**, dans le cas e2), tous les objets (2a...2d) tenus par le robot (3) sont déposés dans l'équipement de chargement source (5a, 5b) et on continue avec l'étape a).

5. Procédé selon la revendication 1 ou 2, **caractérisé en ce que**, dans le cas e2), tous les objets (2a...2d) tenus par le robot (3) sont déposés au niveau d'une position de dépose (16) différente de l'équipement de chargement source (5a, 5b) et de l'équipement de chargement cible (6a...6c), un objet (2a...2d) destiné à l'équipement de chargement cible (6a...6c) est détecté et déposé dans l'équipement de chargement cible (6a...6c) et un objet (2a...2d) non destiné à l'équipement de chargement cible (6a...6c) est détecté et est déposé dans l'équipement de chargement source (5a, 5b) et on continue avec l'étape a).

6. Procédé selon la revendication 1 ou 2, **caractérisé en ce que**, dans le cas e2), tous les objets (2a...2d) tenus par le robot (3) sont déposés dans l'équipement de chargement cible (6a...6c), un objet (2a...2d) non destiné à l'équipement de chargement cible (6a...6c) est retiré de l'équipement de chargement cible (6a...6c) et est déposé dans l'équipement de chargement source (5a, 5b) et on continue avec l'étape a).

7. Procédé selon l'une des revendications 1 à 6, **caractérisé en ce que** les objets (2a...2d) sont munis de balises d'identification radio ou balises RFID et
- le deuxième système de capteur comprend un premier lecteur RFID (14a) pour ces balises RFID, dont la zone de lecture inclut l'équipement de chargement source (5a, 5b), l'équipement de chargement cible (6a...6c) mais exclut une zone de maintien (A) du robot (3) et **en ce que**, à l'aide d'une information, lue avec le premier lecteur RFID (14a) sur la balise RFID, le nombre et/ou le type de l'au moins un objet (2a...2d) retiré de l'équipement de chargement source (5a, 5b) est déterminé et/ou
- le deuxième système de capteur comprend un deuxième lecteur RFID (14b) pour ces balises RFID, dont la zone de lecture inclut l'équipement de chargement cible (6a...6c), l'équipement de chargement source (5a, 5b) mais exclut une zone de maintien (A) du robot (3) et **en ce que**, à l'aide d'une information, lue avec le deuxième lecteur RFID (14b) sur la balise RFID, le nombre et/ou le type de l'au moins un objet (2a...2d) déposé dans l'équipement de chargement cible (6a...6c) est déterminé et/ou
- le deuxième système de capteur comprend un troisième lecteur RFID pour ces balises RFID, dont la zone de lecture inclut une zone de maintien (A) du robot (3), mais exclut l'équipement de chargement source (5a, 5b) et l'équipement de chargement cible (6a...6c), et **en ce que**, à l'aide d'une information, lue avec le troisième lecteur RFID sur la balise RFID, le nombre et/ou le type de l'au moins un objet (2a...2d) tenu par le robot (3) est déterminé.

8. Procédé selon la revendication 7, **caractérisé en ce que**
- les objets (2a...2d) contenus dans l'équipement de chargement source (5a, 5b) sont détectés à l'aide du premier lecteur RFID (14a) avant et après le retrait de l'au moins un objet (2a...2d) et **en ce que** le nombre et/ou le type de l'au moins un objet (2a...2d) retiré de l'équipement de chargement source (5a, 5b) est déterminé à l'aide d'une différence déterminée entre les objets (2a...2d) détectés lors des deux processus de lecture et/ou
- les objets (2a...2d) contenus dans l'équipement de chargement cible (6a...6c) sont détectés à l'aide du deuxième lecteur RFID (14b) avant et après la dépose de l'au moins un objet (2a...2d) et **en ce que** le nombre et/ou le type de l'au moins un objet (2a...2d) déposé dans l'équipement de chargement cible (6a...6c) est déterminé à l'aide d'une différence déterminée entre les objets (2a...2d) détectés lors des deux processus de lecture.

9. Procédé selon la revendication 7 ou 8, **caractérisé en ce qu'**un troisième lecteur RFID pour balises RFID, disposé sur une partie mobile (10) du robot (3)
- est déplacé en direction de l'équipement de chargement source (5a, 5b) afin de détecter les objets (2a...2d) contenus dans l'équipement de chargement source (5a, 5b) et/ou
- est déplacé en direction de l'équipement de chargement cible (6a...6c) fin de détecter les objets (2a...2d) contenus dans l'équipement de chargement cible (6a...6c) et/ou
- est éloigné de l'équipement de chargement source (5a, 5b) ou de l'équipement de chargement cible (6a...6c) afin de détecter les objets (2a...2d) tenu par le robot (3) dans la zone de maintien (A).

10. Procédé selon l'une des revendications 7 à 9, **caractérisé en ce que**, sur une balise RFID, est enregistré le type d'un objet (2a...2d) sur ou dans lequel est disposée la balise RFID ou **en ce que**, sur ladite balise RFID, est enregistrée une référence dans une base de données dans laquelle ledit type est enregistré.

11. Procédé selon l'une des revendications 1 à 10, **caractérisé en ce que** le deuxième système de capteur comprend une caméra (17) et/ou un capteur 3D respectivement un système de reconnaissance 3D et
- le nombre et/ou le type de l'au moins un objet (2a...2d) retiré de l'équipement de chargement source (5a, 5b) est déterminé grâce à une comparaison d'une représentation, détectée avant, et d'une représentation, détectée après le processus de retrait, d'un contenu de l'équipement de chargement source (5a, 5b) et/ou
- le nombre et/ou le type de l'au moins un objet (2a...2d) déposé dans l'équipement de chargement cible (6a...6c) est déterminé grâce à une comparaison d'une représentation, détectée avant, et d'une représentation, détectée après le processus de dépose, d'un contenu de l'équipement de chargement cible (6a...6c) et/ou
- le nombre et/ou le type de l'au moins un objet (2a...2d) tenu par le robot (3) est déterminé à l'aide d'une représentation détectée de la zone de maintien (A) du robot (3).

12. Procédé selon l'une des revendications 1 à 11, **caractérisé en ce que**
- l'équipement de chargement source (5a, 5b) est pesé, avant et après le retrait de l'au moins un objet (2a...2d) à l'aide d'une balance (18), qui est comprise dans le deuxième système de capteur et **en ce que** le nombre et/ou le type de l'au moins un objet (2a...2d) retiré de l'équipement de chargement source (5a, 5b) est déterminé à l'aide d'un poids différentiel mesuré et/ou
- l'équipement de chargement cible (6a...6c) est pesé, avant et après la dépose de l'au moins un objet (2a...2d) à l'aide d'une balance (18), qui est comprise dans le deuxième système de capteur et **en ce que** le nombre et/ou le type de l'au moins un objet (2a...2d) déposé dans l'équipement de chargement cible (6a...6c) est déterminé à l'aide d'un poids différentiel mesuré et/ou
- un poids tenu par le robot (3) avant et après le retrait de l'au moins un objet (2a...2d) est mesuré à l'aide d'une balance, qui est comprise dans le deuxième système de capteur et **en ce que** le nombre et/ou le type de l'au moins un objet (2a...2d) tenu par le robot (3) est déterminé à l'aide d'un poids différentiel mesuré.

13. Procédé selon la revendication 12, **caractérisé en ce que**
- un poids d'un objet (2a...2d) contenu dans l'équipement de chargement source (5a, 5b) d'un type est connu et
- le nombre et/ou le type de l'au moins un objet (2a...2d) retiré de l'équipement de chargement source (5a, 5b) et/ou l'objet (2a...2d) déposé dans l'équipement de chargement cible (6a...6c) et/ou tenu par le robot (3) est déterminé en cherchant une combinaison des objets (2a...2d) contenus dans l'équipement de chargement source (5a, 5b) dont le poids total est globalement égal au poids différentiel.

14. Procédé selon la revendication 13, **caractérisé en ce que** le poids différentiel est divisé par le poids total de chaque combinaison d'objets (2a...2d) contenus dans l'équipement de chargement source (5a, 5b) jusqu'à un nombre total de cinq objets (2a...2d) ou jusqu'à un nombre total d'objets (2a...2d) qui peuvent être retirés par le robot (3) de l'équipement de chargement source (5a, 5b) lors d'un processus de retrait et la combinaison recherchée est celle qui correspond à la valeur la plus proche de un.

15. Procédé selon la revendication 14, **caractérisé en ce qu'**on procède comme selon l'une des revendications 3 à 5, dans le cas e2), si la valeur la plus proche de un présente un écart par rapport à un supérieur à une première valeur seuil ou un écart par rapport à la deuxième valeur la plus proche inférieur à une deuxième valeur seuil.

16. Procédé selon l'une des revendications 13 à 15, **caractérisé en ce que** les poids totaux de chaque combinaison d'objets (2a...2d) jusqu'à un nombre total de cinq objets (2a...2d) ou jusqu'à un nombre total d'objets (2a...2d) qui peuvent être retirés par le robot (3) de l'équipement de chargement source (5a, 5b) lors d'un processus de retrait, sont différents entre eux.

17. Procédé selon l'une des revendications 4 à 16, **caractérisé en ce qu'**on procède comme selon l'une des revendications 4 à 6, dans le cas e2), et/ou **en ce qu'**une alarme est déclenchée lorsque
- une comparaison entre le nombre déterminé et/ou le type déterminé de l'au moins un objet (2a...2d) retiré de l'équipement de chargement source (5a, 5b) indique un écart par rapport au nombre déterminé et/ou au type déterminé de l'au moins un objet (2a...2d) tenu par le robot (3) et/ou
- une comparaison entre le nombre déterminé et/ou le type déterminé de l'au moins un objet (2a...2d) retiré de l'équipement de chargement source (5a, 5b) indique un écart par rapport au nombre déterminé et/ou au type déterminé de l'au moins un objet (2a...2d) déposé dans l'équipement de chargement cible (6a...6c) et/ou
- une comparaison entre le nombre déterminé et/ou le type déterminé de l'au moins un objet (2a...2d) tenu par le robot (3) indique un écart par rapport au nombre déterminé et/ou au type déterminé de l'au moins un objet (2a...2d) déposé dans l'équipement de chargement cible (6a...6c).

18. Procédé selon l'une des revendications 1 à 17, **caractérisé en ce qu'**il est ordonné au robot (3), pour le processus de retrait, de retirer un nombre exact d'objets (2a...2d) de l'équipement de chargement source (5a, 5b).

19. Procédé selon l'une des revendications 1 à 17, **caractérisé en ce qu'**il est ordonné au robot (3), pour le processus de retrait, de retirer un nombre quelconque d'objets (2a...2d) de l'équipement de chargement source (5a, 5b).

20. Procédé selon l'une des revendications 1 à 19, **caractérisé en ce qu'**il est ordonné au robot (3), pour le processus de retrait, de retirer un objet (2a...2d) déterminé ou des objets (2a...2d) déterminés de l'équipement de chargement source (5a, 5b).

21. Procédé selon l'une des revendications 1 à 19, **caractérisé en ce qu'**il est ordonné au robot (3), pour le processus de retrait, de retirer n'importe quel objet (2a...2d) ou n'importe quels objets (2a...2d) de l'équipement de chargement source (5a, 5b).

22. Procédé selon l'une des revendications 1 à 21, **caractérisé en ce qu'**il est ordonné au robot (3), de retirer l'au moins un objet (2a...2d) à une position précise de l'équipement de chargement source (5a, 5b) et/ou de le déposer à une position précise dans l'équipement de chargement cible (6a...6c).

23. Procédé selon l'une des revendications 1 à 21, **caractérisé en ce qu'**il est ordonné au robot (3), de retirer l'au moins un objet (2a...2d) à une position quelconque de l'équipement de chargement source (5a, 5b) et/ou de le déposer à une position quelconque dans l'équipement de chargement cible (6a...6c).

24. Procédé selon l'une des revendications 1 à 23, **caractérisé en ce qu'**un seul type d'objets (2a...2d) est contenu dans l'équipement de chargement source (5a, 5b).

25. Procédé selon l'une des revendications 1 à 24, **caractérisé en ce que** le premier système de capteur (11) détermine uniquement un état d'occupation de la zone de maintien (A) du robot (3) par au moins un objet (2a...2d).

26. Procédé selon l'une des revendications 1 à 25, **caractérisé en ce que** la vérification est effectuée avec le premier système de capteur (11) une seule fois par exécution des étapes a) à e).

27. Procédé selon l'une des revendications 1 à 25, **caractérisé en ce que** la vérification est effectuée avec le premier système de capteur (11) plusieurs fois par exécution des étapes a) à e).

28. Dispositif (1a...1c) pour la préparation de commandes de marchandises, respectivement d'objets (2a...2d), comprenant
- un robot (3) avec des moyens (4) pour le retrait d'au moins un objet (2a...2d) d'un équipement de chargement source (5a, 5b) et pour la dépose de l'au moins un objet (2a...2d) dans un équipement de chargement cible (6a...6c),
- un dispositif de mise à disposition (7) pour la mise à disposition de l'équipement de chargement source (5a, 5b) et de l'équipement de chargement cible (6a...6c) dans une zone d'action du robot (3),
- un premier système de capteur (11) pour la vérification si au moins un objet (2a...2d) est tenu par le robot (3),
- un deuxième système de capteur (14a, 14b, 17, 18) pour la détermination d'un nombre de l'au moins un objet (2a...2d) retiré et
- une commande (15) qui est conçue pour interrompre ou modifier un processus de dépose de l'au moins un objet (2a...2d) dans l'équipement de chargement cible (6a...6c) si la vérification avec le premier système de capteur (11) indique qu'aucun objet (2a...2d) n'est tenu par le robot (3) ou qu'au moins objet (2a...2d) est tenu par le robot (3), mais que la vérification effectuée avec le deuxième système de capteur (14a, 14b, 17, 18) indique que le nombre de l'au moins un objet (2a...2d) retiré de l'équipement de chargement source (5a, 5b) est supérieure à la différence entre un nombre de consigne et un nombre réel d'objets contenus dans l'équipement de chargement cible, dans lequel le nombre de consigne d'objets (2a...2d) dans l'équipement de chargement cible (6a...6c) est défini par une tâche d préparation de commande.

29. Dispositif (1a...1c) selon la revendication 28, **caractérisé en ce que** le deuxième système de capteur (14a, 14b, 17, 18) est conçu en outre pour la détermination d'un type de l'au moins un objet (2a...2d) retiré et la commande (15) est en outre conçue pour interrompre ou modifier le processus de dépose de l'au moins un objet (2a...2d) dans l'équipement de chargement cible (6a...6c) si la vérification effectuée avec le deuxième système de capteur (14a, 14b, 17, 18) indique en outre que le type de l'au moins un objet (2a...2d) retiré de l'équipement de chargement source (5a, 5b) ne contribue pas à l'exécution de la tâche de préparation de commande, qui définit en outre un type de consigne d'objets (2a...2d) dans l'équipement de chargement cible (6a...6c).

30. Dispositif (1a...1c) selon la revendication 28 ou 29, **caractérisé en ce que** les moyens pour le retrait et pour la dépose de l'au moins un objet (2a...2d) sont constitués d'un préhenseur (4) en forme de pince ou de main ou d'une ventouse ou d'une combinaison quelconque de ces dispositifs préhenseurs.

31. Dispositif (1a...1c) selon l'une des revendications 28 à 30, **caractérisé en ce que** le premier système de capteur (11) et/ou le deuxième système de capteur (14a, 14b, 17, 18) est disposé sur le robot (3).

32. Dispositif (1a...1c) selon l'une des revendications 28 à 31, **caractérisé en ce que** le deuxième système de capteur (14a, 14b, 17, 18) est stationnaire et détecte l'équipement de chargement source (5a, 5b) et/ou l'équipement de chargement cible (6a...6c).

33. Dispositif (1a...1c) selon l'une des revendications 28 à 32, **caractérisé en ce que** le premier système de capteur (11) comprend un capteur à ultrasons et/ou, dans la mesure où le robot (3) est équipé d'une ventouse, un capteur de vide et/ou un lecteur RFID et/ou une caméra et/ou une balance / un capteur de force.

34. Dispositif (1a...1c) selon l'une des revendications 28 à 33, **caractérisé en ce que** le deuxième système de capteur comprend
- un lecteur RFID (14a, 14b) pour des balises d'identification radio, ou balises RFOD, dont la zone de lecture inclut l'équipement de chargement source (5a, 5b), l'équipement de chargement cible (6a...6c) et/ou une zone de maintien (A) du robot (3),
- une caméra (A) et/ou un capteur 3D / un système de reconnaissance 3D, qui est conçu pour la détection d'une représentation d'un contenu de l'équipement de chargement source (5a, 5b), de l'équipement de chargement cible (6a...6c) et/ou d'une zone de maintien (A) du robot (3) ou
- au moins une balance (18) pour le pesage de l'équipement de chargement source (5a, 5b), de l'équipement de chargement cible (6a...6c) et/ou d'une zone de maintien (A) du robot (3).

35. Dispositif (1a...1c) selon l'une des revendications 28 à 34, **caractérisé en ce que** le dispositif de mise à disposition comprend un dispositif de convoyage (7) pour le transport de l'équipement de chargement source (5a, 5b) dans une zone d'action du robot (3) et pour le transport de l'équipement de chargement cible (6a...6c) hors de la zone d'action du robot (3).

36. Dispositif (1a...1c) selon l'une des revendications 28 à 35, **caractérisé par**
- une surface de liaison fixe, plane et horizontale ou
- une surface de liaison fixe inclinée vers l'équipement de chargement source (5a, 5b) ou l'équipement de chargement cible (6a...6c) ou
- une surface de liaison fixe inclinée par la position de dépose (16) ou
- une surface de liaison / clapet (20) mobile, pouvant être incliné vers l'équipement de chargement source (5a, 5b) ou vers l'équipement de chargement cible (6a...6c) ou vers la position de dépose (16),
disposée entre l'équipement de chargement source (5a, 5b) et l'équipement de chargement cible (6a...6c).

37. Dispositif (1a...1c) selon la revendication 36, **caractérisé par** un ensemble de capteurs détectant la surface de liaison ou le clapet (20).

38. Produit de programme informatique avec un programme informatique stocké dessus, qui peut être chargé dans/sur un ordinateur (15) d'un dispositif (1a...1c) selon l'une des revendications 28 à 37 et qui exécute un procédé selon l'une des revendications 1 à 27 lorsque le programme informatique y est exécuté.
